(19) Europäisches Patentamt
European Patent Office
Office européen des brevets

(11) EP 2 849 384 B1

## (12) EUROPEAN PATENT SPECIFICATION

(45) Date of publication and mention
of the grant of the patent:
**19.07.2017 Bulletin 2017/29**

(21) Application number: **14787086.9**

(22) Date of filing: **26.02.2014**

(51) Int Cl.:
***H04L 12/24*** *(2006.01)*      ***H04L 12/26*** *(2006.01)*
***H04L 29/06*** *(2006.01)*

(86) International application number:
**PCT/CN2014/072536**

(87) International publication number:
**WO 2015/007095 (22.01.2015 Gazette 2015/03)**

(54) **APPROXIMATE MATCHING METHOD AND RELATED DEVICE, AND COMMUNICATION SYSTEM**

VERFAHREN FÜR ANNÄHERNDE ANPASSUNG, VORRICHTUNG DAFÜR UND KOMMUNIKATIONSSYSTEM

PROCÉDÉ DE MISE EN CORRESPONDANCE APPROXIMATIVE ET DISPOSITIF ASSOCIÉ AINSI QUE SYSTÈME DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2013 CN 201310306887**

(43) Date of publication of application:
**18.03.2015 Bulletin 2015/12**

(73) Proprietor: **Huawei Technologies Co., Ltd.
Longgang District
Shenzhen, Guangdong 518129 (CN)**

(72) Inventors:
• **NIU, Yuxuan
Shenzhen
Guangdong 518129 (CN)**
• **ZHOU, Wei
Shenzhen
Guangdong 518129 (CN)**

(74) Representative: **Gill Jennings & Every LLP
The Broadgate Tower
20 Primrose Street
London EC2A 2ES (GB)**

(56) References cited:
**EP-A1- 2 573 995         WO-A1-02/071227
CN-A- 1 741 526          CN-A- 101 741 686
CN-A- 103 414 600        US-A1- 2003 097 439
US-A1- 2006 050 704      US-A1- 2008 071 779
US-A1- 2009 028 143**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to the field of communications technologies, and in particular, to a similarity matching method and a related device and a communication system.

### BACKGROUND

Currently, broadband services bring not only opportunities but also challenges to operators. The operators need to face a series of new topics such as bandwidth management, content charging, and information security. In face of growing service traffic, a deep packet inspection (DPI, Deep Packet Inspection) technology is considered as an effective method for meeting management and control challenges brought by multiple services of a network. Coverage of regional traffic is an important metric for measuring a DPI capability.

However, with the popularity of intelligent terminals such as smart phones, the quantity of applications grows explosively. In addition, more and more applications (applications such as Skype and Vbuzzer) always evade inspection of DPI manufacturers by automatically changing traffic features of the applications, including variations of behavior features, binary changes, mixture of traffic, addition of random lengths, and other manners of changing traffic features. Facing challenges of unknown traffic brought by new applications, the industry commonly makes analysis by capturing traffic of a live network + manual analysis at present.

In the process of researching and practicing the prior art, the inventors of the present invention find that the prior art generally has the following disadvantages: The existing manual analysis manner has low efficiency and a low response speed, and can hardly satisfy requirements of operators on coverage of the live network in time and hardly support analysis and identification of traffic of new applications; and accuracy can hardly satisfy requirements of refined services.

US2006/0050704 discloses that a system/method searches a traffic stream for a sequence of "matching" packets that exhibit a high degree of correlation or similarity to a sequence of "reference" packets.

EP2573995 relates to a method and apparatus for identifying an application protocol.

### SUMMARY

Embodiments of the present invention provide a similarity matching method and a related device and a communication system to improve efficiency and accuracy of traffic analysis.

According to a first aspect, the present invention provides a similarity matching method, which may include:

obtaining unknown traffic;
separately calculating similarities between the unknown traffic and sampled traffic according to N dimensions; and
performing weighted harmonic averaging for calculated similarities that are corresponding to the dimensions, to obtain a matching similarity between the unknown traffic and the sampled traffic, where, N is an integer greater than or equal to 2, and the N dimensions include two or more of the following dimensions: n1 dimensions related to packets of the unknown traffic and the sampled traffic and n2 dimensions related to sessions corresponding to the unknown traffic and the sampled traffic, wherein n1 and n2 are positive integers; and
if the matching similarity between the sampled traffic and the unknown traffic is greater than a similarity threshold, outputting a traffic identification result indicating that the unknown traffic and the sampled traffic are of a same service type.

With reference to the first aspect, in a first possible implementation manner, the separately calculating similarities between the unknown traffic and sampled traffic according to N dimensions includes: when the unknown traffic fails to be identified based on a deep packet inspection technology, separately calculating the similarities between the unknown traffic and the sampled traffic according to the N dimensions.

With reference to the first aspect or the first possible implementation manner of the first aspect, in a second possible implementation manner, the separately calculating similarities between the unknown traffic and sampled traffic according to N dimensions includes: performing at least two of the following similarity calculation operations:

calculating a similarity between a packet length of the unknown traffic and a packet length of the sampled traffic;
calculating a similarity between packet payload content of the unknown traffic and packet payload content of the sampled traffic;
calculating a similarity between a packet port number of the unknown traffic and a packet port number of the sampled traffic;

calculating a similarity between a packet transmission rate of the unknown traffic and a packet transmission rate of the sampled traffic;

calculating a similarity between an uplink packet quantity of the unknown traffic and an uplink packet quantity of the sampled traffic;

calculating a similarity between a downlink packet quantity of the unknown traffic and a downlink packet quantity of the sampled traffic;

calculating a similarity between a ratio of the uplink packet quantity to the downlink packet quantity of the unknown traffic and a ratio of the uplink packet quantity to the downlink packet quantity of the sampled traffic;

calculating a similarity between an uplink traffic volume of the unknown traffic and an uplink traffic volume of the sampled traffic;

calculating a similarity between a downlink traffic volume of the unknown traffic and a downlink traffic volume of the sampled traffic;

calculating a similarity between a ratio of the uplink traffic volume to the downlink traffic volume of the unknown traffic and a ratio of the uplink traffic volume to the downlink traffic volume of the sampled traffic; and

calculating a similarity between a traffic volume of first M packets of the unknown traffic and a traffic volume of first M packets of the sampled traffic.

With reference to the second possible implementation manner of the first aspect, in a third possible implementation manner, the calculating a similarity between packet payload content of the unknown traffic and packet payload content of the sampled traffic includes:

calculating a similarity between characters of the packet payload content of the unknown traffic and characters of the packet payload content of the sampled traffic;

calculating a matching degree between the packet payload content of the unknown traffic and the packet payload content of the sampled traffic; and

calculating a product of a square root of the matching degree and the character similarity, where the product obtained by calculation is the similarity between the packet payload content of the unknown traffic and the packet payload content of the sampled traffic, and the character similarity is equal to a quantity of same characters between the packet payload content of the unknown traffic and the packet payload content of the sampled traffic, divided by a total quantity of characters of the packet payload content of the sampled traffic, and the matching degree is equal to 1 minus a differentiation degree between the packet payload content of the unknown traffic and the packet payload content of the sampled traffic, where the differentiation degree is equal to a quantity of characters, in the packet payload content of the sampled traffic, which are different from characters in the packet payload content of the unknown traffic, divided by a total quantity of characters of the packet payload content of the sampled traffic.

With reference to the second possible implementation manner of the first aspect or the third possible implementation manner of the first aspect, in a fourth possible implementation manner, the calculating a similarity between a packet length of the unknown traffic and a packet length of the sampled traffic includes: dividing the packet length of the unknown traffic by the packet length of the sampled traffic to obtain a quotient, where the quotient is the similarity between the packet length of the unknown traffic and the packet length of the sampled traffic; or, determining a first length interval within which the packet length of the unknown traffic falls, and determining, according to a correspondence relationship between a length interval and a similarity value, a similarity value corresponding to the first length interval, where the similarity value corresponding to the first length interval is the similarity between the packet length of the unknown traffic and the packet length of the sampled traffic.

According to a second aspect, the present invention provides a similarity matching apparatus, including:

an obtaining unit, configured to obtain unknown traffic; and

a similarity calculating unit, configured to separately calculate, according to N dimensions, similarities between sampled traffic and the unknown traffic obtained by the obtaining unit; and perform weighted harmonic averaging for calculated similarities that are corresponding to the dimensions, to obtain a matching similarity between the unknown traffic and the sampled traffic, where, N is an integer greater than or equal to 2, and the N dimensions include two or more of the following dimensions: n1 dimensions related to packets of the unknown traffic and the sampled traffic and n2 dimensions related to sessions corresponding to the unknown traffic and the sampled traffic, wherein n1 and n2 are positive integers; and

wherein the similarity matching apparatus is configured to output a traffic identification result indicating that the unknown traffic and the sampled traffic are of a same service type if the matching similarity between the sampled traffic and the unknown traffic is greater than a similarity threshold.

With reference to the second aspect, in a first possible implementation manner,
the similarity calculating unit is specifically configured to separately calculate the similarities between the unknown traffic and the sampled traffic according to the N dimensions when the unknown traffic fails to be identified based on a deep packet inspection technology; and perform weighted harmonic averaging for the calculated similarities that are corresponding to the N dimensions, to obtain the matching similarity between the unknown traffic and the sampled traffic.

With reference to the second aspect or the first possible implementation manner of the second aspect, in a second possible implementation manner, in respect of the separately calculating similarities between the unknown traffic and sampled traffic according to N dimensions, the similarity calculating unit is specifically configured to perform at least two of the following similarity calculation operations:

calculating a similarity between a packet length of the unknown traffic and a packet length of the sampled traffic;
calculating a similarity between packet payload content of the unknown traffic and packet payload content of the sampled traffic;
calculating a similarity between a packet port number of the unknown traffic and a packet port number of the sampled traffic;
calculating a similarity between a packet transmission rate of the unknown traffic and a packet transmission rate of the sampled traffic;
calculating a similarity between an uplink packet quantity of the unknown traffic and an uplink packet quantity of the sampled traffic;
calculating a similarity between a downlink packet quantity of the unknown traffic and a downlink packet quantity of the sampled traffic;
calculating a similarity between a ratio of the uplink packet quantity to the downlink packet quantity of the unknown traffic and a ratio of the uplink packet quantity to the downlink packet quantity of the sampled traffic;
calculating a similarity between an uplink traffic volume of the unknown traffic and an uplink traffic volume of the sampled traffic;
calculating a similarity between a downlink traffic volume of the unknown traffic and a downlink traffic volume of the sampled traffic;
calculating a similarity between a ratio of the uplink traffic volume to the downlink traffic volume of the unknown traffic and a ratio of the uplink traffic volume to the downlink traffic volume of the sampled traffic;
calculating a similarity between a traffic volume of first M packets of the unknown traffic and a traffic volume of first M packets of the sampled traffic; and
performing weighted harmonic averaging for at least two similarities obtained by calculation, to obtain the matching similarity between the unknown traffic and the sampled traffic.

With reference to the second possible implementation manner of the second aspect, in a third possible implementation manner, in respect of the calculating a similarity between packet payload content of the unknown traffic and packet payload content of the sampled traffic, the similarity calculating unit is specifically configured to:

calculate a similarity between characters of the packet payload content of the unknown traffic and characters of the packet payload content of the sampled traffic;
calculate a matching degree between the packet payload content of the unknown traffic and the packet payload content of the sampled traffic; and
calculate a product of a square root of the matching degree and the character similarity, where the product obtained by calculation is the similarity between the packet payload content of the unknown traffic and the packet payload content of the sampled traffic, and the character similarity is equal to a quantity of same characters between the packet payload content of the unknown traffic and the packet payload content of the sampled traffic, divided by a total quantity of characters of the packet payload content of the sampled traffic, and the matching degree is equal to 1 minus a differentiation degree between the packet payload content of the unknown traffic and the packet payload content of the sampled traffic, where the differentiation degree is equal to a quantity of characters, in the packet payload content of the sampled traffic, which are different from characters in the packet payload content of the unknown traffic, divided by a total quantity of characters of the packet payload content of the sampled traffic.

With reference to the second possible implementation manner of the second aspect, in a fourth possible implementation manner, in respect of the calculating a similarity between a packet length of the unknown traffic and a packet length of the sampled traffic, the similarity calculating unit is specifically configured to divide the packet length of the unknown traffic by the packet length of the sampled traffic to obtain a quotient, where the quotient is the similarity between the packet length of the unknown traffic and the packet length of the sampled traffic; or, determine a first length interval within which the packet length of the unknown traffic falls, and determine, according to a correspondence relationship between a length interval and a similarity value, a similarity value corresponding to the first length interval, where the similarity value corresponding to the first length interval is the similarity between the packet length of the unknown traffic and the packet length of the sampled traffic.

According to a third aspect, the present invention provides a traffic analysis server, where the traffic analysis server includes:

a receiver configured to receive unknown traffic or a mirror of unknown traffic, a similarity identification engine coupled with the receiver, and a transmitter configured to send a matching similarity between the unknown traffic and sampled traffic, or send a matching similarity between the mirror of the unknown traffic and sampled traffic, or send a matching similarity between the unknown traffic output by the similarity identification engine and sampled traffic, or send a matching similarity between the mirror of the unknown traffic output by the similarity identification engine and sampled traffic,, where the similarity identification engine is the similarity matching apparatus according to the foregoing embodiment.

According to a fourth aspect, the present invention provides a communication network element, including a transceiver and a processor coupled with the transceiver and configured to perform network communication, where the communication device further includes: a similarity identification engine coupled with the transceiver, where the similarity identification engine is the similarity matching apparatus according to the foregoing embodiment.

As can be seen from the above, in a solution of an embodiment of the present invention, after unknown traffic is obtained, similarities between the unknown traffic and sampled traffic are separately calculated according to N dimensions; and weighted harmonic averaging is performed for calculated similarities that are corresponding to the dimensions, to obtain a matching similarity between the unknown traffic and the sampled traffic, where, N is an integer greater than or equal to 2. An embodiment of the present invention provides a mechanism that may use a traffic analysis device to analyze similar traffic, which helps to improve efficiency of traffic analysis. Because similarities between unknown traffic and sampled traffic are separately calculated according to N dimensions, and the similarities obtained according to the N dimensions are integrated, where the N dimensions include two or more dimensions of the following dimensions: n1 dimensions related to packets of the unknown traffic and the sampled traffic and n2 dimensions related to sessions corresponding to the unknown traffic and the sampled traffic, wherein n1 and n2 are positive integers, compared with a regular single-dimension matching mechanism, the technical solution put forward by the embodiment of the present invention selects N dimensions from typical dimensions such as n1 dimensions related to packets of the unknown traffic and the sampled traffic and n2 dimensions related to sessions corresponding to the unknown traffic and the sampled traffic, wherein n1 and n2 are positive integers, to perform combinatorial analysis, which helps to greatly improve accuracy of traffic analysis and further helps to provide effective support for charging of related services.

## BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.

FIG. 1 is a schematic flowchart of a similarity matching method according to an embodiment of the present invention;
FIG. 2-a is a schematic architectural diagram of a network in which a traffic analysis device is located according to an embodiment of the present invention;

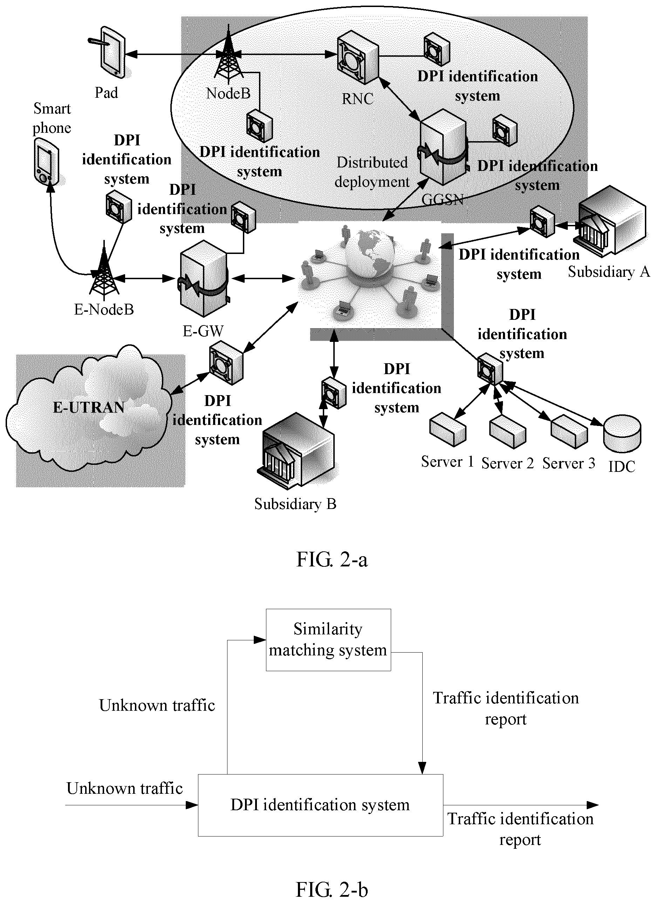

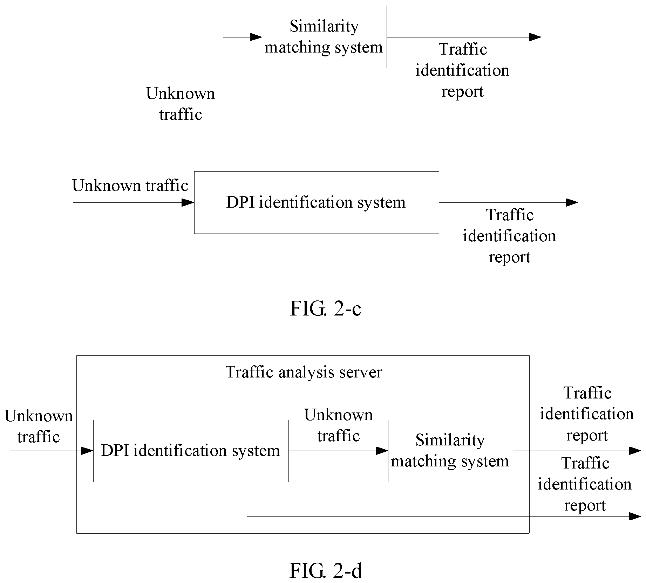

FIG. 2-b is a schematic diagram of deployment of a similarity matching system and a DPI identification system according to an embodiment of the present invention;
FIG. 2-c is a schematic diagram of deployment of another similarity matching system and another DPI identification system according to an embodiment of the present invention;
FIG. 2-d is a schematic diagram of deployment of another similarity matching system and another DPI identification system according to an embodiment of the present invention;

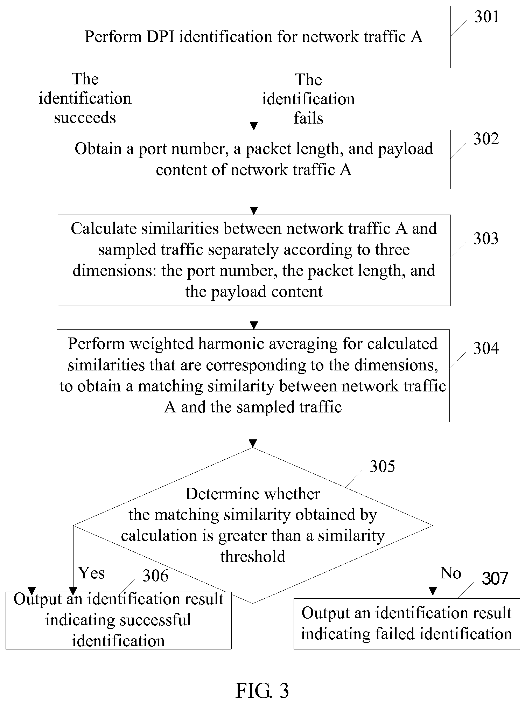

FIG. 3 is a schematic flowchart of a traffic analysis method according to an embodiment of the present invention;

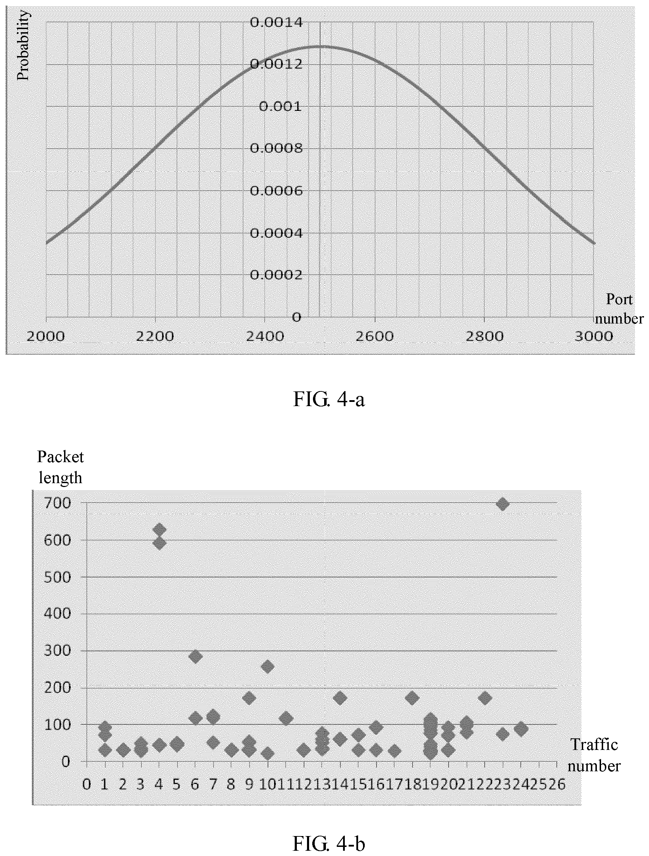

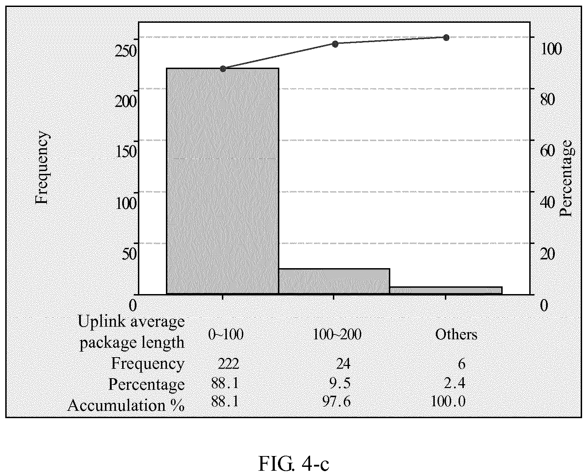

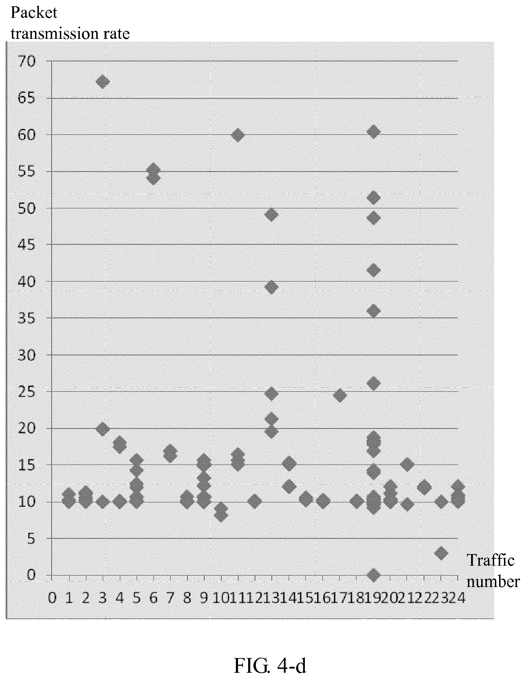

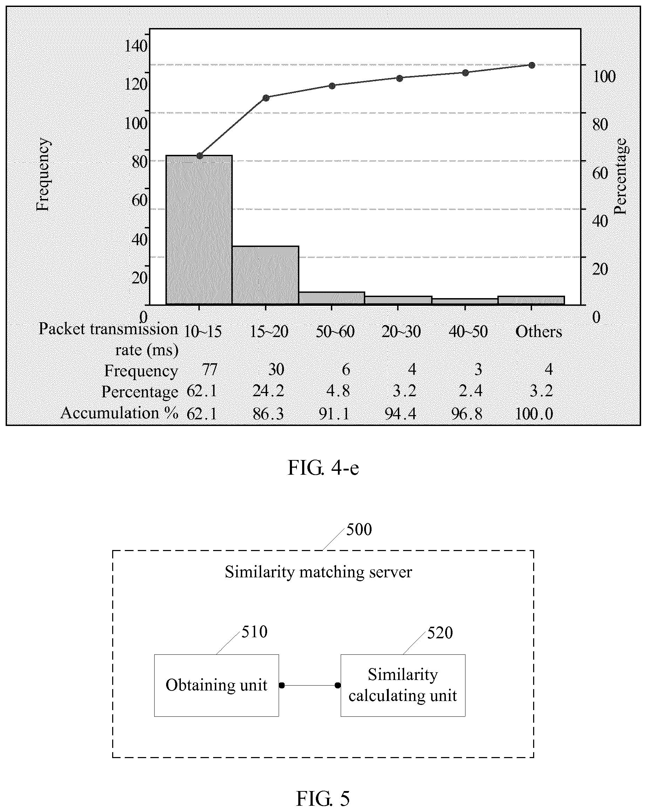

FIG. 4-a is a schematic diagram of distribution of port numbers of a type of sampled traffic according to an embodiment of the present invention;
FIG. 4-b is a schematic diagram of distribution of packet lengths of a type of sampled traffic according to an embodiment of the present invention;
FIG. 4-c is a schematic diagram of distribution of packet lengths of another type of sampled traffic according to an embodiment of the present invention;
FIG. 4-d is a schematic diagram of distribution of packet transmission rates of a type of sampled traffic according to an embodiment of the present invention;

FIG. 4-e is a schematic diagram of distribution of packet transmission rates of another type of sampled traffic according to an embodiment of the present invention;

FIG. 5 is a schematic diagram of a similarity matching server according to an embodiment of the present invention;

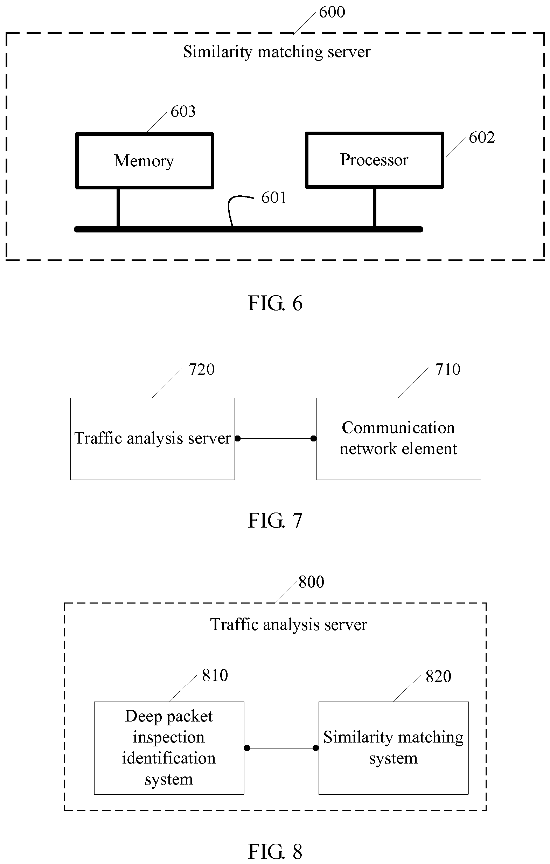

FIG. 6 is a schematic diagram of another similarity matching server according to an embodiment of the present invention;

FIG. 7 is a schematic diagram of a communication system according to an embodiment of the present invention;

FIG. 8 is a schematic diagram of a traffic analysis server according to an embodiment of the present invention;

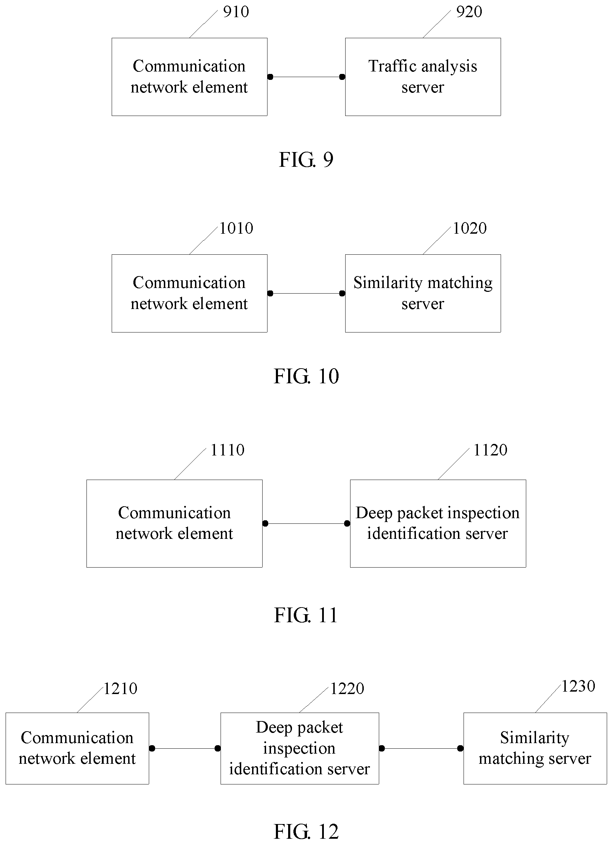

FIG. 9 is a schematic diagram of another communication system according to an embodiment of the present invention;

FIG. 10 is a schematic diagram of another communication system according to an embodiment of the present invention;

FIG. 11 is a schematic diagram of another communication system according to an embodiment of the present invention;

FIG. 12 is a schematic diagram of another communication system according to an embodiment of the present invention;

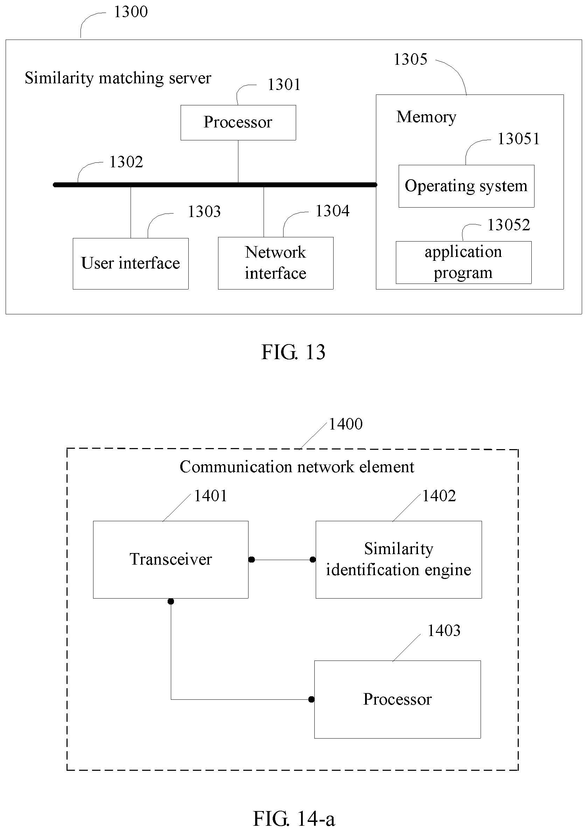

FIG. 13 is a schematic diagram of another similarity matching server according to an embodiment of the present invention;

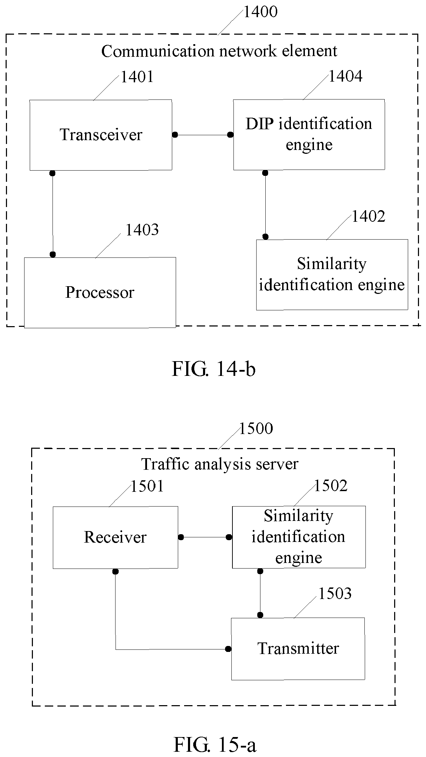

FIG. 14-a is a schematic diagram of a communication network element according to an embodiment of the present invention;

FIG. 14-b is a schematic diagram of another communication network element according to an embodiment of the present invention;

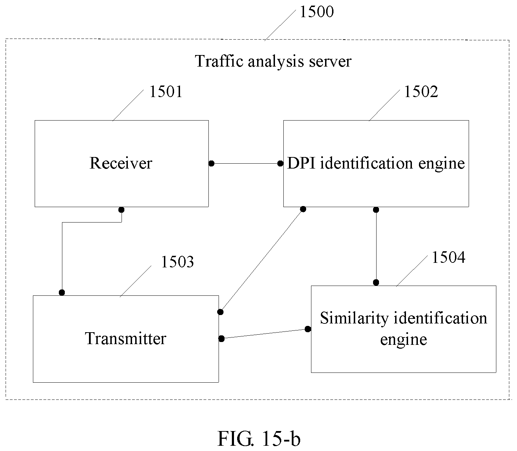

FIG. 15-a is a schematic diagram of a traffic analysis server according to an embodiment of the present invention; and

FIG. 15-b is a schematic diagram of another traffic analysis server according to an embodiment of the present invention.

## DESCRIPTION OF EMBODIMENTS

Embodiments of the present invention provide a similarity matching method and a related device and a communication system to improve efficiency and accuracy of traffic analysis.

To make persons skilled in the art understand the technical solutions in the present invention better, the following clearly describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention. The embodiments of the present invention are hereinafter described in detail:

The terms "first", "second", "third", "fourth", and so on (if existent) in the specification and claims and the drawings of the present invention are used to distinguish similar objects instead of describing a specific sequence or order. It should be understood that the data used in this way may be interchanged under appropriate circumstances, so that the embodiments of the present invention described herein can be implemented in another sequence in addition to the sequences illustrated or described herein. In addition, the terms "include", "have", and any other variant thereof are intended to cover a non-exclusive inclusion, for example, a process, method, system, product, or device that includes a series of steps or units is not limited to the expressly listed steps or units, but may include other steps or units which are not expressly listed or are inherent to the process, method, product, or device.

In an embodiment of the similarity matching method according to the present invention, a similarity matching method may include: obtaining unknown traffic; and separately calculating similarities between the unknown traffic and sampled traffic according to N dimensions; and performing weighted harmonic averaging for calculated similarities that are corresponding to the dimensions, to obtain a matching similarity between the unknown traffic and the sampled traffic, where, N is an integer greater than or equal to 2.

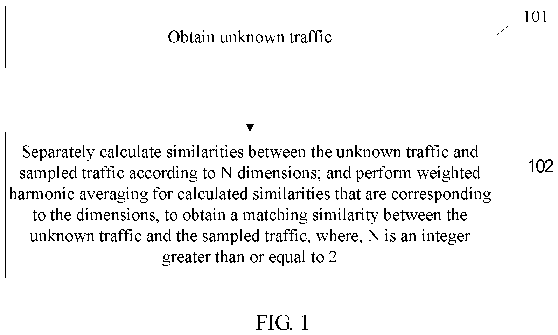

Referring to FIG. 1, FIG. 1 is a schematic flowchart of a similarity matching method according to an embodiment of the present invention. As shown in FIG. 1, a similarity matching method according to an embodiment of the present invention may include the following processes:

101. Obtain unknown traffic.

A device or system used for implementing similarity matching may obtain unknown traffic from a DPI server or a network element (where the network element may be, for example, a base station, a base station controller, a gateway, or a server).

102. Separately calculate similarities between the unknown traffic and sampled traffic according to N dimensions;

and perform weighted harmonic averaging for calculated similarities that are corresponding to the dimensions, to obtain a matching similarity between the unknown traffic and the sampled traffic, where, N is an integer greater than or equal to 2.

The N dimensions may include N dimensions of the following dimensions: n1 dimensions related to a packet of the traffic, n2 dimensions related to a session corresponding to the traffic, and n3 dimensions related to the traffic itself, where n1, n2, and n3 are positive integers.

It may be understood that the matching similarity between the unknown traffic and the sampled traffic is equal to a value obtained by calculation by performing weighted harmonic averaging for the obtained similarity corresponding to each dimension, that is, the matching similarity is a result of integrating similarities corresponding to the N dimensions. The matching similarity helps to reflect similarities between the unknown traffic and the sampled traffic more objectively and accurately.

The n1 dimensions related to a packet of the traffic are n1 dimensions using packets (for example, packet headers and/or packet payloads) in the traffic as an analysis angle. The n1 dimensions related to a packet of the traffic may include, for example, using a length of a packet in the traffic as a dimension, using payload content of a packet in the traffic as a dimension, and using a port number of a packet in the traffic as a dimension.

The n2 dimensions related to a session corresponding to the traffic are n2 dimensions using the session corresponding to the traffic as an analysis angle. The n2 dimensions related to the session corresponding to the traffic may include, for example, using an uplink packet quantity of the session corresponding to the traffic as a dimension, using a downlink packet quantity of the session corresponding to the traffic as a dimension, using a ratio of the uplink packet quantity to the downlink packet quantity of the session corresponding to the traffic as a dimension, using an uplink traffic volume of the session corresponding to the traffic as a dimension, using a downlink traffic volume of the session corresponding to the traffic as a dimension, and using a ratio of the uplink traffic volume to the downlink traffic volume of the session corresponding to the traffic as a dimension.

The n3 dimensions related to the traffic itself are n3 dimensions using the traffic itself as an analysis angle. The n3 dimensions are unrelated to the payload of each packet in the traffic, and are also unrelated to the session corresponding to the traffic. The n3 dimensions related to the traffic itself may include, for example, using a traffic volume of first M packets in the traffic as a dimension, using a packet transmission rate of the traffic as a dimension, and so on.

In some embodiments of the present invention, before the similarities between the unknown traffic and the sampled traffic are separately calculated according to the N dimensions, the obtained unknown traffic may be first identified based on a DPI technology. If the unknown traffic is successfully identified based on the DPI technology, an identification result of the DPI technology may be output. The step of separately calculating similarities between the unknown traffic and sampled traffic according to N dimensions is performed only after the unknown traffic fails to be identified based on the DPI technology.

In some embodiments of the present invention, if the obtained matching similarity between the sampled traffic and the unknown traffic is greater than a set similarity threshold, a traffic analysis device may output a traffic identification result indicating successful matching between the unknown traffic and the sampled traffic (where the traffic identification result may indicate, for example, that the unknown traffic and the sampled traffic are of a same service type. In this case, charging for the unknown traffic may be performed according to a package charging mode corresponding to the service type of the sampled traffic. For example, an Fk1 package service exists, all traffic for a user to access the Fk1 is free, and separate charging is performed for external video traffic and advertisement traffic of the Fk1. Other service scenarios are deduced in the same way). In addition, if the obtained matching similarity between the sampled traffic and the unknown traffic is less than the set similarity threshold, the traffic analysis device may output a traffic identification result indicating failed matching between the unknown traffic and the sampled traffic.

A dimension used for identification may be selected according to actual requirements. Selected dimensions may vary according to different application scenarios and different accuracy requirements. For example, at least two dimensions may be selected from the following dimensions to calculate the similarities between the unknown traffic and the sampled traffic: packet payload content, a packet length, a packet port number, a packet transmission rate, an uplink packet quantity, a downlink packet quantity, a ratio of the uplink packet quantity to the downlink packet quantity, an uplink traffic volume, a downlink traffic volume, a ratio of the uplink traffic volume to the downlink traffic volume, a traffic volume of first M packets, and so on. Certainly, the embodiment of the present invention is not limited to the foregoing dimensions, and other dimensions may also be introduced.

In some embodiments of the present invention, the separately calculating similarities between the unknown traffic and sampled traffic according to N dimensions includes: performing at least two of the following similarity calculation operations:

calculating a similarity between a packet length of the unknown traffic and a packet length of the sampled traffic;
calculating a similarity between packet payload content of the unknown traffic and packet payload content of the sampled traffic;
calculating a similarity between a packet port number of the unknown traffic and a packet port number of the sampled traffic;

calculating a similarity between a packet transmission rate of the unknown traffic and a packet transmission rate of the sampled traffic;

calculating a similarity between an uplink packet quantity of the unknown traffic and an uplink packet quantity of the sampled traffic;

calculating a similarity between a downlink packet quantity of the unknown traffic and a downlink packet quantity of the sampled traffic;

calculating a similarity between a ratio of the uplink packet quantity to the downlink packet quantity of the unknown traffic and a ratio of the uplink packet quantity to the downlink packet quantity of the sampled traffic;

calculating a similarity between an uplink traffic volume of the unknown traffic and an uplink traffic volume of the sampled traffic;

calculating a similarity between a downlink traffic volume of the unknown traffic and a downlink traffic volume of the sampled traffic;

calculating a similarity between a ratio of the uplink traffic volume to the downlink traffic volume of the unknown traffic and a ratio of the uplink traffic volume to the downlink traffic volume of the sampled traffic; and

calculating a similarity between a traffic volume of first M packets of the unknown traffic and a traffic volume of first M packets of the sampled traffic.

In an actual application, multiple manners compliant with the computation logic in the field may be used to calculate a similarity between the unknown traffic and the sampled traffic according to a corresponding dimension. For example, the calculating a similarity between packet payload content of the unknown traffic and packet payload content of the sampled traffic may include: calculating a similarity between characters of the packet payload content of the unknown traffic and characters of the packet payload content of the sampled traffic; calculating a matching degree between the packet payload content of the unknown traffic and the packet payload content of the sampled traffic; and calculating a product of a square root of the matching degree and the character similarity, where the product obtained by calculation is the similarity between the packet payload content of the unknown traffic and the packet payload content of the sampled traffic, and the character similarity is equal to a quantity of same characters between the packet payload content of the unknown traffic and the packet payload content of the sampled traffic, divided by a total quantity of characters of the packet payload content of the sampled traffic, and the matching degree is equal to 1 minus a differentiation degree between the packet payload content of the unknown traffic and the packet payload content of the sampled traffic, where the differentiation degree is equal to a quantity of characters, in the packet payload content of the sampled traffic, which are different from characters in the packet payload content of the unknown traffic, divided by a total quantity of characters of the packet payload content of the sampled traffic.

In some embodiments of the present invention, the calculating a similarity between a packet length of the unknown traffic and a packet length of the sampled traffic may include, for example, dividing the packet length of the unknown traffic by the packet length of the sampled traffic to obtain a quotient, where the quotient is the similarity between the packet length of the unknown traffic and the packet length of the sampled traffic; or, determining a first length interval within which the packet length of the unknown traffic falls, and determining, according to a correspondence relationship between a length interval and a similarity value, a similarity value corresponding to the first length interval, where the similarity value corresponding to the first length interval is the similarity between the packet length of the unknown traffic and the packet length of the sampled traffic.

Manners of calculating similarities corresponding to other dimensions may be deduced in the same way, and are not further enumerated one by one herein.

As shown in FIG. 2-a, by deployment, a DPI identification system may obtain traffic of multiple devices in a network. For example, the DPI identification system may be a card or a software module, and the DPI identification system may be embedded into a network element such as a base station controller or a data gateway. Alternatively, the DPI identification system may be used as an independent device, and may be connected externally or in series or in other manners to access a network. For example, as shown in FIG. 2-a, the DPI identification system may be deployed, in a manner of being connected externally or in series or in other manners, in multiple positions of a network system (positions such as the base station, the base station controller, the gateway, and the server) to analyze device traffic to be analyzed.

Referring to FIG. 2-b, FIG. 2-c, and FIG. 2-d, FIG. 2-b, FIG. 2-c, and FIG. 2-d illustrate a deployment position relationship between a DPI identification system and a similarity matching system. Referring to FIG. 2-b and FIG. 2-c, the similarity matching system and DPI system may be used as a whole. Certainly, the similarity matching system and the DPI identification system may also be two independent devices, where the similarity matching system and the DPI identification system may be collectively called a traffic analysis system. FIG. 2-b shows a scenario in which a similarity matching system may connect to (bypass) a DPI identification system. The similarity matching system may feed back a traffic identification report to the DPI identification system. The DPI identification system reports the traffic identification report to related devices (for example, a charging server and so on) uniformly. Certainly, the similarity matching system and the DPI identification system may also separately report their traffic identification reports to the related devices (for example, a charging server and so on) (as shown in FIG. 2-c). FIG. 2-d shows a scenario in which a similarity matching system may be integrated with a DPI identification system. FIG. 2-d illustrates that a similarity matching system and a DPI identification system may be integrated in a traffic analysis server. It may be understood that at least one of the similarity matching system and the DPI identification system may be integrated in a communication network element. Certainly, the similarity matching system and the DPI identification system may also be devices independent of the communication network element. The traffic identification report may carry a matching similarity between unknown traffic and sampled traffic, or may carry information indicating whether unknown traffic matches sampled traffic (for example, when the matching similarity is greater than a set threshold, it indicates that the unknown traffic matches the sampled traffic, or when the matching similarity is less than a set threshold, it indicates that the unknown traffic does not match the sampled traffic). A related device receiving the traffic identification report (for example, a charging server or the like) may perform corresponding processing based on the traffic identification report (for example, traffic charging processing or the like).

It may be understood that in the foregoing examples, the matching similarity is calculated mainly for a piece of unknown traffic and a piece of sampled traffic. For a scenario in which multiple pieces of sampled traffic exist, a matching similarity between the unknown traffic and each piece of sampled traffic may be calculated in a similar way. Likewise, for a corresponding scenario in which multiple pieces of unknown traffic exist, a matching similarity between each piece of unknown traffic and each piece of sampled traffic may also be separately calculated in a similar way. The specific process is not further described herein.

As can be seen from the above, in a solution of an embodiment of the present invention, after unknown traffic is obtained, similarities between the unknown traffic and sampled traffic are separately calculated according to N dimensions; and weighted harmonic averaging is performed for calculated similarities that are corresponding to the dimensions, to obtain a matching similarity between the unknown traffic and the sampled traffic, where, N is an integer greater than or equal to 2. A mechanism that may use a traffic analysis device to analyze similar traffic is provided, which helps to improve efficiency of traffic analysis. Because similarities between unknown traffic and sampled traffic are separately calculated according to N dimensions, and the similarities obtained according to the N dimensions are integrated, where the N dimensions include N dimensions of the following dimensions: n1 dimensions related to a packet of the traffic, n2 dimensions related to a session corresponding to the traffic, and n3 dimensions related to the traffic itself, compared with a regular single-dimension matching mechanism, the technical solution put forward by the embodiment of the present invention selects N dimensions from typical dimensions such as n1 dimensions related to a packet of the traffic, n2 dimensions related to a session corresponding to the traffic, and n3 dimensions related to the traffic itself, to perform combinatorial analysis, which helps to greatly improve accuracy of traffic analysis and further helps to provide effective support for charging of related services.

For better understanding and implementing the foregoing solution of the embodiment of the present invention, the following uses some application scenarios as examples for description.

Referring to FIG. 3, FIG. 3 is a schematic flowchart of a traffic analysis method according to another embodiment of the present invention. As shown in FIG. 3, the traffic analysis method according to another embodiment of the present invention may include the following processes:

301. Perform DPI identification for network traffic A (namely, unknown traffic).

In the DPI identification, an identification technology based on a feature field is the most basic, and is applied most extensively. Different applications usually use different protocols. However, various protocols have their special fingerprints. These fingerprints may be a specific port, a specific string, or a specific bit (Bit) sequence. The identification technology based on the feature field just determines, by identifying fingerprint information in data packets of network traffic A, an application carried by service traffic. According to different specific inspection manners, the identification technology based on the feature field may be further classified into three branch technologies: fixed position feature field matching, variable position feature field matching, and state feature field matching. Related mechanisms of the DPI identification are not further described herein.

If the DPI identification succeeds, step 306 is performed.

If the DPI identification fails, step 302 is performed.

It is assumed that the features of network traffic A are as follows:

a source port is 1433,
a destination port is 2457,
a source IP address is 192.168.1.2,
a destination IP address is 192.168.1.1,

payload content is abefgabc785551...,

a payload length is 97 bytes,

a packet transmission rate is sending a packet every 13 ms, and

a protocol of network traffic A is a Transmission Control Protocol.

302. Obtain the port number, packet length, and payload content of network traffic A.

303. Calculate similarities between network traffic A and sampled traffic separately according to three dimensions: the port number, the packet length, and the payload content.

It is assumed that: payload content of the sampled traffic is aabcabce, an offset is 0, the sampled traffic is carried by the Transmission Control protocol, and a protocol name is VoIPA. It is assumed that a distribution of port numbers of the sampled traffic is shown in FIG. 4-a. In FIG. 4-a, a horizontal coordinate indicates port numbers, and a vertical coordinate indicates probabilities. Distributions of packet lengths of the sampled traffic are shown in FIG. 4-b and FIG. 4-c. In FIG. 4-b, a horizontal coordinate indicates traffic numbers, and a vertical coordinate indicates packet lengths. In FIG. 4-c, a horizontal coordinate indicates segments of uplink packet lengths (divided into three segments in the figure), the left of the vertical coordinate indicates occurrence frequencies of the segments, and the right of the vertical coordinate indicates percentages of the segments. Distributions of packet transmission rates of the sampled traffic are shown in FIG. 4-d and FIG. 4-e. In FIG. 4-d, a horizontal coordinate indicates traffic numbers, and a vertical coordinate indicates packet transmission rates. In FIG. 4-e, a horizontal coordinate indicates segments of packet transmission rates (divided into five segments in the figure), the left of the vertical coordinate indicates occurrence frequencies of the segments, and the right of the vertical coordinate indicates percentages of the segments.

In some embodiments of the present invention, a similarity between payload content of network traffic A and payload content of the sampled traffic may be calculated based on the law of cosine. Assuming that payload content of network traffic A is a string s1, and that the payload content of the sampled traffic is a string s2, the similarity sim(s1, s2) between the two strings is determined by comparison. Assuming that n different characters are included in the string s1 and string s2, and are c1, c2, ..., cn respectively, determining the similarity between the strings may be changed to determining an angle between vectors v1 and v2 corresponding to the two strings. A greater cosine value indicates a smaller angle between the vectors v1 and v2 corresponding to the two strings and a greater similarity between the string s1 and string s2, that is, a greater similarity between the payload content of network traffic A and the payload content of the sampled traffic. Conversely, a less cosine value indicates a larger angle between the vectors v1 and v2 corresponding to the two strings and a less similarity between the string s1 and string s2, that is, a less similarity between the payload content of network traffic A and the payload content of the sampled traffic.

In some embodiments of the present invention, the similarity between the payload content of network traffic A and the payload content of the sampled traffic may also be calculated based on a longest common substring. Assuming that payload content of network traffic A is a string s1, and that the payload content of the sampled traffic is a string s2, a matrix may be used to record a matching result between two characters corresponding to the two strings in all positions thereof. If the two characters are matched, 1 is recorded, or otherwise, 0 is recorded. Then, one sequence with a longest diagonal in the matrix is solved, where a position corresponding to the sequence is a position of a longest matching substring. For example, a longer longest common substring indicates a greater similarity between two strings, that is, a greater similarity between the payload content of network traffic A and the payload content of the sampled traffic. Conversely, a shorter longest common substring indicates a less similarity between two strings, that is, a less similarity between the payload content of network traffic A and the payload content of the sampled traffic.

In some embodiments of the present invention, the similarity between the payload content of network traffic A and the payload content of the sampled traffic may also be calculated based on the following manner: calculating a similarity between characters of the packet payload content of network traffic A and characters of the packet payload content of the sampled traffic; calculating a matching degree between the packet payload content of network traffic A and the packet payload content of the sampled traffic; and calculating a product of a square root of the matching degree and the character similarity, and using the product obtained by calculation as the similarity between the packet payload content of network traffic A and the packet payload content of the sampled traffic, where the character similarity is equal to a quantity of same characters between the packet payload content of network traffic A and the packet payload content of the sampled traffic, divided by a total quantity of characters of the packet payload content of the sampled traffic, and the matching degree is equal to 1 minus a differentiation degree between the packet payload content of network traffic A and the packet payload content of the sampled traffic, where the differentiation degree is equal to a quantity of characters, in the packet payload content of the sampled traffic, which are different from network traffic A, divided by a total quantity of characters of the packet payload content of the sampled traffic.

Certainly, the manner of calculating the similarity between the payload content of network traffic A and the payload content of the sampled traffic is not limited to the foregoing manner.

In some embodiments of the present invention, a similarity between the packet length of network traffic A and a packet length of the sampled traffic may be calculated based on the following piecewise function:

Based on the piecewise function, the similarity 0.881 between the packet length of network traffic A and the packet length of the sampled traffic may be obtained, because the packet length x of network traffic A falls within a first length interval [0, 100], and the similarity corresponding to the first length interval [0, 100] is equal to 0.881. For a segment used in the piecewise function, reference may be made to a classification method used in Wireshark software. Certainly, the manner of calculating the similarity between the packet length of network traffic A and the packet length of the sampled traffic is limited to the foregoing manner.

In some embodiments of the present invention, a similarity between a port of network traffic A and a port of the sampled traffic may be calculated based on a normal distribution mechanism.

A normal distribution formula is as follows:

The normal distribution formula has distribution of continuous random variables of two parameters $\mu$ and $\sigma2$. The first parameter $\mu$ is an average value of random variables complying with normal distribution, and the second parameter $\sigma2$ is a variance of the random variables. Therefore, the normal distribution is described as $N(\mu, \sigma2)$. The probability law of the random variables complying with the normal distribution is: The probability of a value near $\mu$ is large, and the probability of a value far away from $\mu$ is small; when $\sigma$ is less, the distribution is more centralized around $\mu$; when $\sigma$ is greater, distribution is more decentralized.

Assuming that a standard deviation of the port number of the sampled traffic, which is obtained by calculation, is 310.2418 ($\sigma$), and that an arithmetic mean is 2500 ($\mu$), a probability density may be shown in the following table:

| Formula | Lower Limit | Upper Limit | Probability Density |
| --- | --- | --- | --- |
| $\mu\pm\sigma$ | 2189.758 | 2810.242 | 68.3% |
| $\mu\pm2\sigma$ | 1879.516 | 3120.484 | 95.4% |
| $\mu\pm3\sigma$ | 1569.274 | 3430.726 | 99.7% |

Because the port number of network traffic A is 2457, and falls within [2189.758, 2810.242], the similarity 68.3% between the port of network traffic A and the port of the sampled traffic may be obtained.

Certainly, the manner of calculating the similarity between the port of network traffic A and the port of the sampled traffic is limited to the foregoing manner.

304. Perform weighted harmonic averaging for calculated similarities that are corresponding to the dimensions, to obtain a matching similarity between network traffic A and the sampled traffic.

For example, assuming that set weights of the similarity of the payload content, similarity of the packet length, and similarity of the port are 6, 3, and 1 respectively, the matching similarity calculated by weighted harmonic averaging is as follows:

$$\text{Matching similarity} = (\text{PayloadSR6} * \text{LengthSR}^\wedge 3 * \text{PortSR}^\wedge 1)\ 0.1$$

$$= (0.42046\ 6 * 0.881^\wedge 3 * 0.683^\wedge 1)\ 0.1$$

$$= 0.550976$$

Certainly, the set weights of the similarity of the payload content, similarity of the packet length, and similarity of the port may also be 3, 3, and 1 respectively or other values, and the manner of calculating the matching similarity by weighted harmonic averaging is similar.

305. Determine whether the matching similarity obtained by calculation is greater than a similarity threshold.

If yes, step 306 is performed; otherwise, step 307 is performed.

306. Output an identification result indicating successful identification.

Assuming that network traffic A belongs to traffic in a package, a related device may be instructed not to perform separate charging.

307. Output an identification result indicating failed identification.

In the foregoing scenario, the similarities between network traffic A and the sampled traffic are calculated mainly according to three dimensions: the port number, the packet length, and the payload content. Other scenarios in which the similarities between network traffic A and the sampled traffic are calculated according to the dimensions may be deduced in the same way.

It may be understood that in the foregoing examples, the matching similarity is calculated mainly for a piece of unknown traffic and a piece of sampled traffic. For a scenario in which multiple pieces of sampled traffic exist, a matching similarity between the unknown traffic and each piece of sampled traffic may be calculated in a similar way. Likewise, for a corresponding scenario in which multiple pieces of unknown traffic exist, a matching similarity between each piece of unknown traffic and each piece of sampled traffic may also be separately calculated in a similar way. The specific process is not further described herein.

As can be seen from the above, in the solution of this embodiment, DPI identification is first performed for unknown traffic; if the DPI identification fails, similarities between the unknown traffic and sampled traffic are calculated separately according to dimensions such as a port number, a packet length, and payload content; and weighted harmonic averaging is performed for calculated similarities that are corresponding to the dimensions, to obtain a matching similarity between the unknown traffic and the sampled traffic. A mechanism that may use a traffic analysis device to analyze similar traffic is provided, which may provide an online analysis capability, help to improve an automation rate and reduce analysis time, and help to improve efficiency of traffic analysis. Because similarities between unknown traffic and sampled traffic are separately calculated according to N dimensions, and the similarities obtained according to the N dimensions are integrated, where the N dimensions include N dimensions of the following dimensions: n1 dimensions related to a packet of the traffic, n2 dimensions related to a session corresponding to the traffic, and n3 dimensions related to the traffic itself, compared with a regular single-dimension matching mechanism, the technical solution put forward by the embodiment of the present invention selects N dimensions from typical dimensions such as n1 dimensions related to a packet of the traffic, n2 dimensions related to a session corresponding to the traffic, and n3 dimensions related to the traffic itself, to perform combinatorial analysis, which helps to greatly improve accuracy of traffic analysis and further helps to provide effective support for charging of related services.

For better implementing the foregoing solution of the embodiment of the present invention, the following further provides a related apparatus for implementing the foregoing solution.

Referring to FIG. 5, an embodiment of the present invention further provides a similarity matching server 500, which may include:

an obtaining unit 510 and a similarity calculating unit 520.

The obtaining unit 510 is configured to obtain unknown traffic.

The similarity calculating unit 520 is configured to separately calculate, according to N dimensions, similarities between sampled traffic and the unknown traffic obtained by the obtaining unit; and perform weighted harmonic averaging for calculated similarities that are corresponding to the dimensions, to obtain a matching similarity between the unknown traffic and the sampled traffic, where, N is an integer greater than or equal to 2.

In some embodiments of the present invention, the similarity calculating unit 520 may be specifically configured to separately calculate the similarities between the unknown traffic and the sampled traffic according to the N dimensions when the unknown traffic fails to be identified based on a deep packet inspection technology; and perform weighted harmonic averaging for the calculated similarities that are corresponding to the dimensions, to obtain the matching similarity between the unknown traffic and the sampled traffic, where, N is an integer greater than or equal to 2.

The N dimensions may include N dimensions of the following dimensions: n1 dimensions related to a packet of the traffic, n2 dimensions related to a session corresponding to the traffic, and n3 dimensions related to the traffic itself, where n1, n2, and n3 are positive integers.

The n1 dimensions related to a packet of the traffic are n1 dimensions using packets (for example, packet headers and/or packet payloads) in the traffic as an analysis angle. The n1 dimensions related to a packet of the traffic may include, for example, using a length of a packet in the traffic as a dimension, using payload content of a packet in the traffic as a dimension, and using a port number of a packet in the traffic as a dimension.

The n2 dimensions related to a session corresponding to the traffic are n2 dimensions using the session corresponding to the traffic as an analysis angle. The n2 dimensions related to the session corresponding to the traffic may include, for example, using an uplink packet quantity of the session corresponding to the traffic as a dimension, using a downlink packet quantity of the session corresponding to the traffic as a dimension, using a ratio of the uplink packet quantity to the downlink packet quantity of the session corresponding to the traffic as a dimension, using an uplink traffic volume of the session corresponding to the traffic as a dimension, using a downlink traffic volume of the session corresponding to the traffic as a dimension, and using a ratio of the uplink traffic volume to the downlink traffic volume of the session corresponding to the traffic as a dimension.

The n3 dimensions related to the traffic itself are n3 dimensions using the traffic itself as an analysis angle. The n3 dimensions are unrelated to the payload of each packet in the traffic, and are also unrelated to the session corresponding to the traffic. The n3 dimensions related to the traffic itself may include, for example, using a traffic volume of first M packets in the traffic as a dimension, using a packet transmission rate of the traffic as a dimension, and so on.

The similarity calculating unit 520 may select, according to actual requirements, a dimension used for identification. Selected dimensions may vary according to different application scenarios and different accuracy requirements. For example, the similarity calculating unit 520 may select at least two dimensions from the following dimensions to calculate the similarities between the unknown traffic and the sampled traffic: packet payload content, a packet length, a packet port number, a packet transmission rate, an uplink packet quantity, a downlink packet quantity, a ratio of the uplink packet quantity to the downlink packet quantity, an uplink traffic volume, a downlink traffic volume, a ratio of the uplink traffic volume to the downlink traffic volume, a traffic volume of first M packets, and so on. Certainly, the embodiment of the present invention is not limited to the foregoing similarity comparison dimensions, and other dimensions may also be introduced.

In some embodiments of the present invention, in respect of the separately calculating similarities between the unknown traffic and sampled traffic according to N dimensions, the similarity calculating unit 520 may be specifically configured to perform at least two of the following similarity calculation operations:

calculating a similarity between a packet length of the unknown traffic and a packet length of the sampled traffic;
calculating a similarity between packet payload content of the unknown traffic and packet payload content of the sampled traffic;
calculating a similarity between a packet port number of the unknown traffic and a packet port number of the sampled traffic;
calculating a similarity between a packet transmission rate of the unknown traffic and a packet transmission rate of the sampled traffic;
calculating a similarity between an uplink packet quantity of the unknown traffic and an uplink packet quantity of the sampled traffic;
calculating a similarity between a downlink packet quantity of the unknown traffic and a downlink packet quantity of the sampled traffic;
calculating a similarity between a ratio of the uplink packet quantity to the downlink packet quantity of the unknown traffic and a ratio of the uplink packet quantity to the downlink packet quantity of the sampled traffic;
calculating a similarity between an uplink traffic volume of the unknown traffic and an uplink traffic volume of the sampled traffic;
calculating a similarity between a downlink traffic volume of the unknown traffic and a downlink traffic volume of the sampled traffic;
calculating a similarity between a ratio of the uplink traffic volume to the downlink traffic volume of the unknown traffic and a ratio of the uplink traffic volume to the downlink traffic volume of the sampled traffic;
calculating a similarity between a traffic volume of first M packets of the unknown traffic and a traffic volume of first M packets of the sampled traffic; and
performing weighted harmonic averaging for at least two similarities obtained by calculation, to obtain the matching similarity between the unknown traffic and the sampled traffic.

In some embodiments of the present invention, in respect of the calculating a similarity between packet payload content of the unknown traffic and packet payload content of the sampled traffic, the similarity calculating unit 520 may be specifically configured to:

calculate a similarity between characters of the packet payload content of the unknown traffic and characters of the packet payload content of the sampled traffic;
calculate a matching degree between the packet payload content of the unknown traffic and the packet payload content of the sampled traffic; and
calculate a product of a square root of the matching degree and the character similarity, where the product is the similarity between the packet payload content of the unknown traffic and the packet payload content of the sampled traffic, and the character similarity is equal to a quantity of same characters between the packet payload content of the unknown traffic and the packet payload content of the sampled traffic, divided by a total quantity of characters of the packet payload content of the sampled traffic, and the matching degree is equal to 1 minus a differentiation degree between the packet payload content of the unknown traffic and the packet payload content of the sampled traffic, where the differentiation degree is equal to a quantity of characters, in the packet payload content of the sampled traffic, which are different from characters in the packet payload content of the unknown traffic, divided by a total quantity of characters of the packet payload content of the sampled traffic.

In some other embodiments of the present invention, in respect of the calculating a similarity between packet payload content of the unknown traffic and packet payload content of the sampled traffic, the similarity calculating unit 520 may also be specifically configured to: it is assumed that payload content of the unknown traffic is a string s1, and that payload content of the sampled traffic is a string s2, determine the similarity sim(s1, s2) between the two strings by comparison. Assuming that n different characters are included in the string s1 and string s2, and are c1, c2, ..., cn respectively, determining the similarity between the strings may be changed to determining an angle between vectors v1 and v2 corresponding to the two strings. A greater cosine value indicates a smaller angle between the vectors v1 and v2 corresponding to the two strings and a greater similarity between the string s1 and string s2, that is, a greater similarity between the payload content of the unknown traffic and the payload content of the sampled traffic. Conversely, a less cosine value indicates a larger angle between the vectors v1 and v2 corresponding to the two strings and a less similarity between the string s1 and string s2, that is, a less similarity between the payload content of the unknown traffic and the payload content of the sampled traffic.

In some other embodiments of the present invention, in respect of the calculating a similarity between packet payload content of the unknown traffic and packet payload content of the sampled traffic, the similarity calculating unit 520 may also be specifically configured to: it is assumed that payload content of the unknown traffic is a string s1, and that payload content of the sampled traffic is a string s2, use a matrix to record a matching result between two characters corresponding to the two strings in all positions thereof, and if the two characters are matched (the same), record 1, or otherwise, record 0, and then solve one sequence with a longest diagonal in the matrix, where a position corresponding to the sequence is a position of a longest matching substring. For example, a longer longest common substring indicates a greater similarity between two strings, that is, a greater similarity between the payload content of the unknown traffic and the payload content of the sampled traffic. Conversely, a shorter longest common substring indicates a less similarity between two strings, that is, a less similarity between the payload content of the unknown traffic and the payload content of the sampled traffic.

In some embodiments of the present invention, in respect of the calculating a similarity between a packet length of the unknown traffic and a packet length of the sampled traffic, the similarity calculating unit 520 may be specifically configured to divide the packet length of the unknown traffic by the packet length of the sampled traffic to obtain a quotient, where the quotient is the similarity between the packet length of the unknown traffic and the packet length of the sampled traffic; or, determine a first length interval within which the packet length of the unknown traffic falls, and determine, according to a correspondence relationship between a length interval and a similarity value, a similarity value corresponding to the first length interval, where the similarity value corresponding to the first length interval is the similarity between the packet length of the unknown traffic and the packet length of the sampled traffic.

It may be understood that in the foregoing examples, the matching similarity is calculated mainly for a piece of unknown traffic and a piece of sampled traffic. For a scenario in which multiple pieces of sampled traffic exist, a matching similarity between the unknown traffic and each piece of sampled traffic may be calculated in a similar way. Likewise, for a corresponding scenario in which multiple pieces of unknown traffic exist, a matching similarity between each piece of unknown traffic and each piece of sampled traffic may also be separately calculated in a similar way. The specific process is not further described herein.

It may be understood that the similarity matching apparatus 500 in this embodiment may be used to implement a part or all of the technical solutions in the foregoing method embodiments. The functions of each functional unit of the similarity matching apparatus 500 may be implemented according to the method in the foregoing method embodiments. The specific implementation process is not further described herein. For details, reference may be made to related descriptions in the foregoing embodiments.

As can be seen from the above, in the solution of this embodiment, after obtaining unknown traffic, the similarity matching apparatus 500 separately calculates similarities between the unknown traffic and sampled traffic according to N dimensions; and performs weighted harmonic averaging for calculated similarities that are corresponding to the dimensions, to obtain a matching similarity between the unknown traffic and the sampled traffic, where, N is an integer greater than or equal to 2. A mechanism that may use the similarity matching apparatus 500 to analyze similar traffic is provided, which may provide an online analysis capability, help to improve an automation rate and reduce analysis time, and help to improve efficiency of traffic analysis. Because similarities between unknown traffic and sampled traffic are separately calculated according to N dimensions, and the similarities obtained according to the N dimensions are integrated, where the N dimensions include N dimensions of the following dimensions: n1 dimensions related to a packet of the traffic, n2 dimensions related to a session corresponding to the traffic, and n3 dimensions related to the traffic itself, compared with a regular single-dimension matching mechanism, the technical solution put forward by the embodiment of the present invention selects N dimensions from typical dimensions such as n1 dimensions related to a packet of the traffic, n2 dimensions related to a session corresponding to the traffic, and n3 dimensions related to the traffic itself, to perform combinatorial analysis, which helps to greatly improve accuracy of traffic analysis and further helps to provide effective support for charging of related services.

FIG. 6 is a schematic structural diagram of a similarity matching server 600 according to an embodiment of the present invention. As shown in FIG. 6, the similarity matching server 600 of this embodiment includes at least one bus 601, at least one processor 602 connected to the bus 601, and at least one memory 603 connected to the bus 601.

The processor 602 invokes, through the bus 601, code stored in the memory 603, to obtain unknown traffic;

and separately calculates similarities between the unknown traffic and sampled traffic according to N dimensions; and performs weighted harmonic averaging for calculated similarities that are corresponding to the dimensions, to obtain a matching similarity between the unknown traffic and the sampled traffic, where, N is an integer greater than or equal to 2.

The N dimensions may include N dimensions of the following dimensions: n1 dimensions related to a packet of the traffic, n2 dimensions related to a session corresponding to the traffic, and n3 dimensions related to the traffic itself, where n1, n2, and n3 are positive integers.

The n1 dimensions related to a packet of the traffic are n1 dimensions using packets (for example, packet headers and/or packet payloads) in the traffic as an analysis angle. The n1 dimensions related to a packet of the traffic may include, for example, using a length of a packet in the traffic as a dimension, using payload content of a packet in the traffic as a dimension, and using a port number of a packet in the traffic as a dimension.

The n2 dimensions related to a session corresponding to the traffic are n2 dimensions using the session corresponding to the traffic as an analysis angle. The n2 dimensions related to the session corresponding to the traffic may include, for example, using an uplink packet quantity of the session corresponding to the traffic as a dimension, using a downlink packet quantity of the session corresponding to the traffic as a dimension, using a ratio of the uplink packet quantity to the downlink packet quantity of the session corresponding to the traffic as a dimension, using an uplink traffic volume of the session corresponding to the traffic as a dimension, using a downlink traffic volume of the session corresponding to the traffic as a dimension, and using a ratio of the uplink traffic volume to the downlink traffic volume of the session corresponding to the traffic as a dimension.

The n3 dimensions related to the traffic itself are n3 dimensions using the traffic itself as an analysis angle. The n3 dimensions are unrelated to the payload of each packet in the traffic, and are also unrelated to the session corresponding to the traffic. The n3 dimensions related to the traffic itself may include, for example, using a traffic volume of first M packets in the traffic as a dimension, using a packet transmission rate of the traffic as a dimension, and so on.

The processor 602 may obtain traffic of multiple devices in the network by deployment. For example, the similarity matching server 600 may be a card or a software module, and the similarity matching server 600 may be embedded into a network element such as a base station controller or a data gateway. Alternatively, the similarity matching server 600 may be used as an independent device, and may be connected externally or in series or in other manners to access a network.

In some embodiments of the present invention, the processor 602 may separately calculate the similarities between the unknown traffic and the sampled traffic according to the N dimensions when the unknown traffic fails to be identified based on a deep packet inspection technology; and perform weighted harmonic averaging for the calculated similarities that are corresponding to the dimensions, to obtain the matching similarity between the unknown traffic and the sampled traffic, where, N is an integer greater than or equal to 2.

In some embodiments of the present invention, if the obtained matching similarity between the sampled traffic and the unknown traffic is greater than a set similarity threshold, the processor 602 may output a traffic identification result indicating successful matching between the unknown traffic and the sampled traffic (where the traffic identification result may indicate, for example, that the unknown traffic and the sampled traffic are of a same service type. In this case, charging for the unknown traffic may be performed according to a package charging mode corresponding to the service type of the sampled traffic. For example, an Fk1 package service exists, all traffic for a user to access the Fk1 is free, and separate charging is performed for external video traffic and advertisement traffic of the Fk1. Other service scenarios are deduced in the same way). In addition, if the obtained matching similarity between the sampled traffic and the unknown traffic is less than the set similarity threshold, the processor 602 may output a traffic identification result indicating failed matching between the unknown traffic and the sampled traffic.

The processor 602 may select, according to actual requirements, a dimension used for identification. Selected dimensions may vary according to different application scenarios and different accuracy requirements. For example, the processor 602 may select at least two dimensions from the following dimensions to calculate the similarities between the unknown traffic and the sampled traffic: packet payload content, a packet length, a packet port number, a packet transmission rate, an uplink packet quantity, a downlink packet quantity, a ratio of the uplink packet quantity to the downlink packet quantity, an uplink traffic volume, a downlink traffic volume, a ratio of the uplink traffic volume to the downlink traffic volume, a traffic volume of first M packets, and so on. Certainly, the embodiment of the present invention is not limited to the foregoing similarity comparison dimensions, and other dimensions may also be introduced.

In some embodiments of the present invention, in respect of the separately calculating similarities between the unknown traffic and sampled traffic according to N dimensions, the processor 602 may be specifically configured to perform at least two of the following similarity calculation operations:

calculating a similarity between a packet length of the unknown traffic and a packet length of the sampled traffic;
calculating a similarity between packet payload content of the unknown traffic and packet payload content of the sampled traffic;
calculating a similarity between a packet port number of the unknown traffic and a packet port number of the sampled traffic;

calculating a similarity between a packet transmission rate of the unknown traffic and a packet transmission rate of the sampled traffic;

calculating a similarity between an uplink packet quantity of the unknown traffic and an uplink packet quantity of the sampled traffic;

calculating a similarity between a downlink packet quantity of the unknown traffic and a downlink packet quantity of the sampled traffic;

calculating a similarity between a ratio of the uplink packet quantity to the downlink packet quantity of the unknown traffic and a ratio of the uplink packet quantity to the downlink packet quantity of the sampled traffic;

calculating a similarity between an uplink traffic volume of the unknown traffic and an uplink traffic volume of the sampled traffic;

calculating a similarity between a downlink traffic volume of the unknown traffic and a downlink traffic volume of the sampled traffic;

calculating a similarity between a ratio of the uplink traffic volume to the downlink traffic volume of the unknown traffic and a ratio of the uplink traffic volume to the downlink traffic volume of the sampled traffic; and

calculating a similarity between a traffic volume of first M packets of the unknown traffic and a traffic volume of first M packets of the sampled traffic.

In an actual application, multiple manners compliant with the computation logic in the field may be used to calculate a similarity between the unknown traffic and the sampled traffic according to a corresponding dimension. For example, in respect of the calculating a similarity between packet payload content of the unknown traffic and packet payload content of the sampled traffic, the processor 602 may be specifically configured to: calculate a similarity between characters of the packet payload content of the unknown traffic and characters of the packet payload content of the sampled traffic; calculate a matching degree between the packet payload content of the unknown traffic and the packet payload content of the sampled traffic; and calculate a product of a square root of the matching degree and the character similarity, where the product is the similarity between the packet payload content of the unknown traffic and the packet payload content of the sampled traffic, and the character similarity is equal to a quantity of same characters between the packet payload content of the unknown traffic and the packet payload content of the sampled traffic, divided by a total quantity of characters of the packet payload content of the sampled traffic, and the matching degree is equal to 1 minus a differentiation degree between the packet payload content of the unknown traffic and the packet payload content of the sampled traffic, where the differentiation degree is equal to a quantity of characters, in the packet payload content of the sampled traffic, which are different from characters in the packet payload content of the unknown traffic, divided by a total quantity of characters of the packet payload content of the sampled traffic.

In some other embodiments of the present invention, in respect of the calculating a similarity between packet payload content of the unknown traffic and packet payload content of the sampled traffic, the processor 602 may also be specifically configured to: it is assumed that payload content of the unknown traffic is a string s1, and that payload content of the sampled traffic is a string s2, determine the similarity sim(s1, s2) between the two strings by comparison. Assuming that n different characters are included in the string s1 and string s2, and are c1, c2, ..., cn respectively, determining the similarity between the strings may be changed to determining an angle between vectors v1 and v2 corresponding to the two strings. A greater cosine value indicates a smaller angle between the vectors v1 and v2 corresponding to the two strings and a greater similarity between the string s1 and string s2, that is, a greater similarity between the payload content of the unknown traffic and the payload content of the sampled traffic. Conversely, a less cosine value indicates a larger angle between the vectors v1 and v2 corresponding to the two strings and a less similarity between the string s1 and string s2, that is, a less similarity between the payload content of the unknown traffic and the payload content of the sampled traffic.

In some other embodiments of the present invention, in respect of the calculating a similarity between packet payload content of the unknown traffic and packet payload content of the sampled traffic, the processor 602 may also be specifically configured to: it is assumed that payload content of the unknown traffic is a string s1, and that payload content of the sampled traffic is a string s2, use a matrix to record a matching result between two characters corresponding to the two strings in all positions thereof, and if the two characters are matched (the same), record 1, or otherwise, record 0, and then solve one sequence with a longest diagonal in the matrix, where a position corresponding to the sequence is a position of a longest matching substring. For example, a longer longest common substring indicates a greater similarity between two strings, that is, a greater similarity between the payload content of the unknown traffic and the payload content of the sampled traffic. Conversely, a shorter longest common substring indicates a less similarity between two strings, that is, a less similarity between the payload content of the unknown traffic and the payload content of the sampled traffic.

In some embodiments of the present invention, in respect of the calculating a similarity between a packet length of the unknown traffic and a packet length of the sampled traffic, the processor 602 may be specifically configured to

divide the packet length of the unknown traffic by the packet length of the sampled traffic to obtain a quotient, where the quotient is the similarity between the packet length of the unknown traffic and the packet length of the sampled traffic; or, determine a first length interval within which the packet length of the unknown traffic falls, and determine, according to a correspondence relationship between a length interval and a similarity value, a similarity value corresponding to the first length interval, where the similarity value corresponding to the first length interval is the similarity between the packet length of the unknown traffic and the packet length of the sampled traffic.

Manners of calculating similarities corresponding to other dimensions may be deduced in the same way, and are not further enumerated one by one herein.

It may be understood that in the foregoing examples, the matching similarity is calculated mainly for a piece of unknown traffic and a piece of sampled traffic. For a scenario in which multiple pieces of sampled traffic exist, a matching similarity between the unknown traffic and each piece of sampled traffic may be calculated in a similar way. Likewise, for a corresponding scenario in which multiple pieces of unknown traffic exist, a matching similarity between each piece of unknown traffic and each piece of sampled traffic may also be separately calculated in a similar way. The specific process is not further described herein.

It may be understood that the similarity matching server 600 in this embodiment may be used to implement a part or all of the technical solutions in the foregoing method embodiments. The functions of each functional unit of the similarity matching apparatus 600 may be implemented according to the method in the foregoing method embodiments. The specific implementation process is not further described herein. For details, reference may be made to related descriptions in the foregoing embodiments.

As can be seen from the above, in the solution of the embodiment of the present invention, after obtaining unknown traffic, the processor 602 separately calculates similarities between the unknown traffic and sampled traffic according to N dimensions; and performs weighted harmonic averaging for calculated similarities that are corresponding to the dimensions, to obtain a matching similarity between the unknown traffic and the sampled traffic, where, N is an integer greater than or equal to 2. A mechanism that uses the similarity matching server 600 to analyze similar traffic is provided, which may provide an online analysis capability, help to improve an automation rate and reduce analysis time, and help to improve efficiency of traffic analysis. Because similarities between unknown traffic and sampled traffic are separately calculated according to N dimensions, and the similarities obtained according to the N dimensions are integrated, where the N dimensions include N dimensions of the following dimensions: n1 dimensions related to a packet of the traffic, n2 dimensions related to a session corresponding to the traffic, and n3 dimensions related to the traffic itself, compared with a regular single-dimension matching mechanism, the technical solution put forward by the embodiment of the present invention selects N dimensions from typical dimensions such as n1 dimensions related to a packet of the traffic, n2 dimensions related to a session corresponding to the traffic, and n3 dimensions related to the traffic itself, to perform combinatorial analysis, which helps to greatly improve accuracy of traffic analysis and further helps to provide effective support for charging of related services.

Referring to FIG. 7, an embodiment of the present invention further provides a communication system, including:

a communication network element 710 and a traffic analysis server 720 connected to the communication network element 710.

The communication network element 710 is configured to receive unknown traffic.

The traffic analysis server 720 is configured to obtain the unknown traffic received by the communication network element 710 or obtain a mirror of the unknown traffic received by the communication network element 710; separately calculate similarities between the unknown traffic or the mirror of the unknown traffic and sampled traffic according to N dimensions; and perform weighted harmonic averaging for calculated similarities that are corresponding to the dimensions, to obtain a matching similarity between the unknown traffic or the mirror of the unknown traffic and the sampled traffic, where N is an integer greater than or equal to 2.

The traffic analysis server 720 may be embedded into the communication network element 710 (a network element such as a base station controller or a data gateway). Alternatively, the traffic analysis server 720 may be used as an independent device, and may be connected externally or in series or in other manners to access a network to connect to the communication network element 710.

The N dimensions may include N dimensions of the following dimensions: n1 dimensions related to a packet of the traffic, n2 dimensions related to a session corresponding to the traffic, and n3 dimensions related to the traffic itself, where n1, n2, and n3 are positive integers.

The n1 dimensions related to a packet of the traffic are n1 dimensions using packets (for example, packet headers and/or packet payloads) in the traffic as an analysis angle. The n1 dimensions related to a packet of the traffic may include, for example, using a length of a packet in the traffic as a dimension, using payload content of a packet in the traffic as a dimension, and using a port number of a packet in the traffic as a dimension.

The n2 dimensions related to a session corresponding to the traffic are n2 dimensions using the session corresponding to the traffic as an analysis angle. The n2 dimensions related to the session corresponding to the traffic may include, for example, using an uplink packet quantity of the session corresponding to the traffic as a dimension, using a downlink packet quantity of the session corresponding to the traffic as a dimension, using a ratio of the uplink packet quantity to the downlink packet quantity of the session corresponding to the traffic as a dimension, using an uplink traffic volume of the session corresponding to the traffic as a dimension, using a downlink traffic volume of the session corresponding to the traffic as a dimension, and using a ratio of the uplink traffic volume to the downlink traffic volume of the session corresponding to the traffic as a dimension.

The n3 dimensions related to the traffic itself are n3 dimensions using the traffic itself as an analysis angle. The n3 dimensions are unrelated to the payload of each packet in the traffic, and are also unrelated to the session corresponding to the traffic. The n3 dimensions related to the traffic itself may include, for example, using a traffic volume of first M packets in the traffic as a dimension, using a packet transmission rate of the traffic as a dimension, and so on.

It may be understood that the communication network element of this embodiment may be, for example, a network element that may be used to transmit service traffic in the network, for example, a base station controller, a gateway, or various data servers.

In some embodiments of the present invention, the traffic analysis server 720 may be specifically configured to: when the unknown traffic or the mirror of the unknown traffic fails to be identified based on a deep packet inspection technology, separately calculate the similarities between the unknown traffic or the mirror of the unknown traffic and the sampled traffic according to the N dimensions; and perform weighted harmonic averaging for the calculated similarities that are corresponding to the dimensions, to obtain the matching similarity between the unknown traffic or the mirror of the unknown traffic and the sampled traffic, where, N is an integer greater than or equal to 2.

In some embodiments of the present invention, if the obtained matching similarity between the sampled traffic and the unknown traffic or the mirror of the unknown traffic is greater than a set similarity threshold, the traffic analysis server 720 may output a traffic identification result indicating successful matching between the unknown traffic or the mirror of the unknown traffic and the sampled traffic to the communication network element 710 or other communication network elements (where the traffic identification result may indicate, for example, that the unknown traffic or the mirror of the unknown traffic and the sampled traffic are of a same service type. In this case, charging for the unknown traffic or the mirror of the unknown traffic may be performed according to a package charging mode corresponding to the service type of the sampled traffic. For example, an Fk1 package service exists, all traffic for a user to access the Fk1 is free, and separate charging is performed for external video traffic and advertisement traffic of the Fk1. Other service scenarios are deduced in the same way). In addition, if the obtained matching similarity between the sampled traffic and the unknown traffic or the mirror of the unknown traffic is less than the set similarity threshold, the traffic analysis server 720 may output a traffic identification result indicating failed matching between the unknown traffic or the mirror of the unknown traffic and the sampled traffic to the communication network element 710 or other communication network elements.

A dimension used for identification may be selected according to actual requirements. Selected dimensions may vary according to different application scenarios and different accuracy requirements. For example, at least two dimensions may be selected from the following dimensions to calculate the similarities between the unknown traffic or the mirror of the unknown traffic and the sampled traffic: packet payload content, a packet length, a packet port number, a packet transmission rate, an uplink packet quantity, a downlink packet quantity, a ratio of the uplink packet quantity to the downlink packet quantity, an uplink traffic volume, a downlink traffic volume, a ratio of the uplink traffic volume to the downlink traffic volume, a traffic volume of first M packets, and so on. Certainly, the embodiment of the present invention is not limited to the foregoing similarity comparison dimensions, and other dimensions may also be introduced.

In some embodiments of the present invention, in respect of the separately calculating similarities between the unknown traffic or the mirror of the unknown traffic and sampled traffic according to N dimensions, the traffic analysis server 720 may be specifically configured to perform at least two of the following similarity calculation operations:

calculating a similarity between a packet length of the unknown traffic or the mirror of the unknown traffic and a packet length of the sampled traffic;
calculating a similarity between packet payload content of the unknown traffic or the mirror of the unknown traffic and packet payload content of the sampled traffic;
calculating a similarity between a packet port number of the unknown traffic or the mirror of the unknown traffic and a packet port number of the sampled traffic;
calculating a similarity between a packet transmission rate of the unknown traffic or the mirror of the unknown traffic and a packet transmission rate of the sampled traffic;
calculating a similarity between an uplink packet quantity of the unknown traffic or the mirror of the unknown traffic and an uplink packet quantity of the sampled traffic;
calculating a similarity between a downlink packet quantity of the unknown traffic or the mirror of the unknown traffic and a downlink packet quantity of the sampled traffic;

calculating a similarity between a ratio of the uplink packet quantity to the downlink packet quantity of the unknown traffic or the mirror of the unknown traffic and a ratio of the uplink packet quantity to the downlink packet quantity of the sampled traffic;

calculating a similarity between an uplink traffic volume of the unknown traffic or the mirror of the unknown traffic and an uplink traffic volume of the sampled traffic;

calculating a similarity between a downlink traffic volume of the unknown traffic or the mirror of the unknown traffic and a downlink traffic volume of the sampled traffic;

calculating a similarity between a ratio of the uplink traffic volume to the downlink traffic volume of the unknown traffic or the mirror of the unknown traffic and a ratio of the uplink traffic volume to the downlink traffic volume of the sampled traffic; and

calculating a similarity between a traffic volume of first M packets of the unknown traffic or the mirror of the unknown traffic and a traffic volume of first M packets of the sampled traffic.

In an actual application, multiple manners compliant with the computation logic in the field may be used to calculate a similarity between the unknown traffic or the mirror of the unknown traffic and the sampled traffic according to a corresponding dimension. For example, in respect of the calculating a similarity between packet payload content of the unknown traffic or the mirror of the unknown traffic and packet payload content of the sampled traffic, the traffic analysis server 720 may be specifically configured to: calculate a similarity between characters of the packet payload content of the unknown traffic or the mirror of the unknown traffic and characters of the packet payload content of the sampled traffic; calculate a matching degree between the packet payload content of the unknown traffic or the mirror of the unknown traffic and the packet payload content of the sampled traffic; and calculate a product of a square root of the matching degree and the character similarity, where the product is the similarity between the packet payload content of the unknown traffic or the mirror of the unknown traffic and the packet payload content of the sampled traffic, and the character similarity is equal to a quantity of same characters between the packet payload content of the unknown traffic or the mirror of the unknown traffic and the packet payload content of the sampled traffic, divided by a total quantity of characters of the packet payload content of the sampled traffic, and the matching degree is equal to 1 minus a differentiation degree between the packet payload content of the unknown traffic or the mirror of the unknown traffic and the packet payload content of the sampled traffic, where the differentiation degree is equal to a quantity of characters, in the packet payload content of the sampled traffic, which are different from characters in the packet payload content of the unknown traffic or the mirror of the unknown traffic, divided by a total quantity of characters of the packet payload content of the sampled traffic.

In some other embodiments of the present invention, in respect of the calculating a similarity between packet payload content of the unknown traffic or the mirror of the unknown traffic and packet payload content of the sampled traffic, the traffic analysis server 720 may also be specifically configured to: it is assumed that payload content of the unknown traffic is a string s1, and that payload content of the sampled traffic is a string s2, determine the similarity sim(s1, s2) between the two strings by comparison. Assuming that n different characters are included in the string s1 and string s2, and are c1, c2, ..., cn respectively, determining the similarity between the strings may be changed to determining an angle between vectors v1 and v2 corresponding to the two strings. A greater cosine value indicates a smaller angle between the vectors v1 and v2 corresponding to the two strings and a greater similarity between the string s1 and string s2, that is, a greater similarity between the payload content of the unknown traffic and the payload content of the sampled traffic. Conversely, a less cosine value indicates a larger angle between the vectors v1 and v2 corresponding to the two strings and a less similarity between the string s1 and string s2, that is, a less similarity between the payload content of the unknown traffic and the payload content of the sampled traffic.

In some other embodiments of the present invention, in respect of the calculating a similarity between packet payload content of the unknown traffic and packet payload content of the sampled traffic, the traffic analysis server 720 may also be specifically configured to: it is assumed that payload content of the unknown traffic is a string s1, and that payload content of the sampled traffic is a string s2, use a matrix to record a matching result between two characters corresponding to the two strings in all positions thereof, and if the two characters are matched (the same), record 1, or otherwise, record 0, and then solve one sequence with a longest diagonal in the matrix, where a position corresponding to the sequence is a position of a longest matching substring. For example, a longer longest common substring indicates a greater similarity between two strings, that is, a greater similarity between the payload content of the unknown traffic and the payload content of the sampled traffic. Conversely, a shorter longest common substring indicates a less similarity between two strings, that is, a less similarity between the payload content of the unknown traffic and the payload content of the sampled traffic.

In some embodiments of the present invention, in respect of the calculating a similarity between a packet length of the unknown traffic or the mirror of the unknown traffic and a packet length of the sampled traffic, the traffic analysis server 720 may be specifically configured to: divide the packet length of the unknown traffic or the mirror of the unknown traffic by the packet length of the sampled traffic to obtain a quotient, where the quotient is the similarity between the packet length of the unknown traffic or the mirror of the unknown traffic and the packet length of the sampled traffic; or, determine a first length interval within which the packet length of the unknown traffic or the mirror of the unknown traffic falls, and determine, according to a correspondence relationship between a length interval and a similarity value, a similarity value corresponding to the first length interval, where the similarity value corresponding to the first length interval is the similarity between the packet length of the unknown traffic or the mirror of the unknown traffic and the packet length of the sampled traffic.

It may be understood that in the foregoing examples, the matching similarity is calculated mainly for a piece of unknown traffic and a piece of sampled traffic. For a scenario in which multiple pieces of sampled traffic exist, a matching similarity between the unknown traffic and each piece of sampled traffic may be calculated in a similar way. Likewise, for a corresponding scenario in which multiple pieces of unknown traffic exist, a matching similarity between each piece of unknown traffic and each piece of sampled traffic may also be separately calculated in a similar way. The specific process is not further described herein.

Manners of calculating similarities corresponding to other dimensions may be deduced in the same way, and are not further enumerated one by one herein.

As can be seen from the above, in the solution of this embodiment, after obtaining unknown traffic from the communication network element 710, the traffic analysis server 720 separately calculates similarities between the unknown traffic and sampled traffic according to N dimensions; and performs weighted harmonic averaging for calculated similarities that are corresponding to the dimensions, to obtain a matching similarity between the unknown traffic and the sampled traffic, where, N is an integer greater than or equal to 2. A mechanism that may use a traffic analysis server to analyze similar traffic is provided, which may provide an online analysis capability, help to improve an automation rate and reduce analysis time, and help to improve efficiency of traffic analysis. Because similarities between unknown traffic and sampled traffic are separately calculated according to N dimensions, and the similarities obtained according to the N dimensions are integrated, where the N dimensions include N dimensions of the following dimensions: n1 dimensions related to a packet of the traffic, n2 dimensions related to a session corresponding to the traffic, and n3 dimensions related to the traffic itself, compared with a regular single-dimension matching mechanism, the technical solution put forward by this embodiment selects N dimensions from typical dimensions such as n1 dimensions related to a packet of the traffic, n2 dimensions related to a session corresponding to the traffic, and n3 dimensions related to the traffic itself, to perform combinatorial analysis, which helps to greatly improve accuracy of traffic analysis and further helps to provide effective support for charging of related services.

Referring to FIG. 8, an embodiment of the present invention further provides a traffic analysis server 800, which may include: a deep packet inspection identification system 810 and a similarity matching system 820.

The deep packet inspection identification system 810 is configured to obtain unknown traffic, and identify the unknown traffic based on a deep packet inspection technology.

The similarity matching system 820 is configured to separately calculate similarities between the unknown traffic and sampled traffic according to N dimensions when the deep packet inspection identification system 810 fails to identify the unknown traffic based on the deep packet inspection technology; and perform weighted harmonic averaging for calculated similarities that are corresponding to the dimensions, to obtain a matching similarity between the unknown traffic and the sampled traffic, where, N is an integer greater than or equal to 2, and the N dimensions may include N dimensions of the following dimensions: n1 dimensions related to a packet of the traffic, n2 dimensions related to a session corresponding to the traffic, and n3 dimensions related to the traffic itself, where n1, n2, and n3 are positive integers.

The n1 dimensions related to a packet of the traffic are n1 dimensions using packets (for example, packet headers and/or packet payloads) in the traffic as an analysis angle. The n1 dimensions related to a packet of the traffic may include, for example, using a length of a packet in the traffic as a dimension, using payload content of a packet in the traffic as a dimension, and using a port number of a packet in the traffic as a dimension.

The n2 dimensions related to a session corresponding to the traffic are n2 dimensions using the session corresponding to the traffic as an analysis angle. The n2 dimensions related to the session corresponding to the traffic may include, for example, using an uplink packet quantity of the session corresponding to the traffic as a dimension, using a downlink packet quantity of the session corresponding to the traffic as a dimension, using a ratio of the uplink packet quantity to the downlink packet quantity of the session corresponding to the traffic as a dimension, using an uplink traffic volume of the session corresponding to the traffic as a dimension, using a downlink traffic volume of the session corresponding to the traffic as a dimension, and using a ratio of the uplink traffic volume to the downlink traffic volume of the session corresponding to the traffic as a dimension.

The n3 dimensions related to the traffic itself are n3 dimensions using the traffic itself as an analysis angle. The n3 dimensions are unrelated to the payload of each packet in the traffic, and are also unrelated to the session corresponding to the traffic. The n3 dimensions related to the traffic itself may include, for example, using a traffic volume of first M packets in the traffic as a dimension, using a packet transmission rate of the traffic as a dimension, and so on.

In some embodiments of the present invention, the separately calculating similarities between the unknown traffic and sampled traffic by the similarity matching system 820 according to N dimensions may include: performing at least two of the following similarity calculation operations:

calculating a similarity between a packet length of the unknown traffic and a packet length of the sampled traffic;
calculating a similarity between packet payload content of the unknown traffic and packet payload content of the sampled traffic;
calculating a similarity between a packet port number of the unknown traffic and a packet port number of the sampled traffic;
calculating a similarity between a packet transmission rate of the unknown traffic and a packet transmission rate of the sampled traffic;
calculating a similarity between an uplink packet quantity of the unknown traffic and an uplink packet quantity of the sampled traffic;
calculating a similarity between a downlink packet quantity of the unknown traffic and a downlink packet quantity of the sampled traffic;
calculating a similarity between a ratio of the uplink packet quantity to the downlink packet quantity of the unknown traffic and a ratio of the uplink packet quantity to the downlink packet quantity of the sampled traffic;
calculating a similarity between an uplink traffic volume of the unknown traffic and an uplink traffic volume of the sampled traffic;
calculating a similarity between a downlink traffic volume of the unknown traffic and a downlink traffic volume of the sampled traffic;
calculating a similarity between a ratio of the uplink traffic volume to the downlink traffic volume of the unknown traffic and a ratio of the uplink traffic volume to the downlink traffic volume of the sampled traffic; and
calculating a similarity between a traffic volume of first M packets of the unknown traffic and a traffic volume of first M packets of the sampled traffic.

In some embodiments of the present invention, in respect of the calculating a similarity between packet payload content of the unknown traffic and packet payload content of the sampled traffic, the similarity matching system 820 may be specifically configured to: calculate a similarity between characters of the packet payload content of the unknown traffic and characters of the packet payload content of the sampled traffic; calculate a matching degree between the packet payload content of the unknown traffic and the packet payload content of the sampled traffic; and calculate a product of a square root of the matching degree and the character similarity, where the product obtained by calculation is the similarity between the packet payload content of the unknown traffic and the packet payload content of the sampled traffic, and the character similarity is equal to a quantity of same characters between the packet payload content of the unknown traffic and the packet payload content of the sampled traffic, divided by a total quantity of characters of the packet payload content of the sampled traffic, and the matching degree is equal to 1 minus a differentiation degree between the packet payload content of the unknown traffic and the packet payload content of the sampled traffic, where the differentiation degree is equal to a quantity of characters, in the packet payload content of the sampled traffic, which are different from characters in the packet payload content of the unknown traffic, divided by a total quantity of characters of the packet payload content of the sampled traffic.

In some other embodiments of the present invention, in respect of the calculating a similarity between packet payload content of the unknown traffic and packet payload content of the sampled traffic, the similarity matching system 820 may also be specifically configured to: it is assumed that payload content of the unknown traffic is a string s1, and that payload content of the sampled traffic is a string s2, determine the similarity sim(s1, s2) between the two strings by comparison. Assuming that n different characters are included in the string s1 and string s2, and are c1, c2, ..., cn respectively, determining the similarity between the strings may be changed to determining an angle between vectors v1 and v2 corresponding to the two strings. A greater cosine value indicates a smaller angle between the vectors v1 and v2 corresponding to the two strings and a greater similarity between the string s1 and string s2, that is, a greater similarity between the payload content of the unknown traffic and the payload content of the sampled traffic. Conversely, a less cosine value indicates a larger angle between the vectors v1 and v2 corresponding to the two strings and a less similarity between the string s1 and string s2, that is, a less similarity between the payload content of the unknown traffic and the payload content of the sampled traffic.

In some other embodiments of the present invention, in respect of the calculating a similarity between packet payload content of the unknown traffic and packet payload content of the sampled traffic, the similarity matching system 820 may also be specifically configured to: it is assumed that payload content of the unknown traffic is a string s1, and that payload content of the sampled traffic is a string s2, use a matrix to record a matching result between two characters corresponding to the two strings in all positions thereof, and if the two characters are matched (the same), record 1, or otherwise, record 0, and then solve one sequence with a longest diagonal in the matrix, where a position corresponding to the sequence is a position of a longest matching substring. For example, a longer longest common substring indicates a greater similarity between two strings, that is, a greater similarity between the payload content of the unknown traffic and the payload content of the sampled traffic. Conversely, a shorter longest common substring indicates a less similarity between two strings, that is, a less similarity between the payload content of the unknown traffic and the payload content of the sampled traffic.

In some embodiments of the present invention, in respect of the calculating a similarity between a packet length of the unknown traffic and a packet length of the sampled traffic, the similarity matching system 820 may be specifically configured to: divide the packet length of the unknown traffic by the packet length of the sampled traffic to obtain a quotient, where the quotient is the similarity between the packet length of the unknown traffic and the packet length of the sampled traffic; or, determine a first length interval within which the packet length of the unknown traffic falls, and determine, according to a correspondence relationship between a length interval and a similarity value, a similarity value corresponding to the first length interval, where the similarity value corresponding to the first length interval is the similarity between the packet length of the unknown traffic and the packet length of the sampled traffic.

It may be understood that in the foregoing examples, the matching similarity is calculated mainly for a piece of unknown traffic and a piece of sampled traffic. For a scenario in which multiple pieces of sampled traffic exist, a matching similarity between the unknown traffic and each piece of sampled traffic may be calculated in a similar way. Likewise, for a corresponding scenario in which multiple pieces of unknown traffic exist, a matching similarity between each piece of unknown traffic and each piece of sampled traffic may also be separately calculated in a similar way. The specific process is not further described herein.

As can be seen from the above, in the solution of the embodiment of the present invention, after obtaining unknown traffic, the deep packet inspection identification system 810 identifies the unknown traffic based on a deep packet inspection technology; and when the deep packet inspection identification system 810 fails to identify the unknown traffic based on the deep packet inspection technology, the similarity matching system 820 separately calculates similarities between the unknown traffic and sampled traffic according to N dimensions, and performs weighted harmonic averaging for calculated similarities that are corresponding to the dimensions, to obtain a matching similarity between the unknown traffic and the sampled traffic, where N is an integer greater than or equal to 2. A mechanism that may use a device to analyze similar traffic is provided, which may provide an online analysis capability, help to improve an automation rate and reduce analysis time, and help to improve efficiency of traffic analysis. Because similarities between unknown traffic and sampled traffic are separately calculated according to N dimensions, and the similarities obtained according to the N dimensions are integrated, where the N dimensions include N dimensions of the following dimensions: n1 dimensions related to a packet of the traffic, n2 dimensions related to a session corresponding to the traffic, and n3 dimensions related to the traffic itself, compared with a regular single-dimension matching mechanism, the technical solution put forward by the embodiment of the present invention selects N dimensions from typical dimensions such as n1 dimensions related to a packet of the traffic, n2 dimensions related to a session corresponding to the traffic, and n3 dimensions related to the traffic itself, to perform combinatorial analysis, which helps to greatly improve accuracy of traffic analysis and further helps to provide effective support for charging of related services.

Referring to FIG. 9, an embodiment of the present invention further provides a communication system, which may include:

a communication network element 910 and a traffic analysis server 920.

The communication network element 910 is configured to receive unknown traffic.

The traffic analysis server 920 is configured to obtain the unknown traffic received by the communication network element 910 or obtain a mirror of the unknown traffic received by the communication network element 910, and identify the unknown traffic or the mirror of the unknown traffic based on a deep packet inspection technology; when the traffic analysis server 920 fails to identify the unknown traffic or the mirror of the unknown traffic based on the deep packet inspection technology, separately calculate similarities between the unknown traffic or the mirror of the unknown traffic and sampled traffic according to N dimensions; and perform weighted harmonic averaging for calculated similarities that are corresponding to the dimensions, to obtain a matching similarity between the unknown traffic or the mirror of the unknown traffic and the sampled traffic, where, N is an integer greater than or equal to 2, and the N dimensions may include N dimensions of the following dimensions: n1 dimensions related to a packet of the traffic, n2 dimensions related to a session corresponding to the traffic, and n3 dimensions related to the traffic itself, where n1, n2, and n3 are positive integers.

The n1 dimensions related to a packet of the traffic are n1 dimensions using packets (for example, packet headers and/or packet payloads) in the traffic as an analysis angle. The n1 dimensions related to a packet of the traffic may include, for example, using a length of a packet in the traffic as a dimension, using payload content of a packet in the traffic as a dimension, and using a port number of a packet in the traffic as a dimension.

The n2 dimensions related to a session corresponding to the traffic are n2 dimensions using the session corresponding to the traffic as an analysis angle. The n2 dimensions related to the session corresponding to the traffic may include, for example, using an uplink packet quantity of the session corresponding to the traffic as a dimension, using a downlink packet quantity of the session corresponding to the traffic as a dimension, using a ratio of the uplink packet quantity to the downlink packet quantity of the session corresponding to the traffic as a dimension, using an uplink traffic volume of the session corresponding to the traffic as a dimension, using a downlink traffic volume of the session corresponding to the traffic as a dimension, and using a ratio of the uplink traffic volume to the downlink traffic volume of the session corresponding to the traffic as a dimension.

The n3 dimensions related to the traffic itself are n3 dimensions using the traffic itself as an analysis angle. The n3 dimensions are unrelated to the payload of each packet in the traffic, and are also unrelated to the session corresponding to the traffic. The n3 dimensions related to the traffic itself may include, for example, using a traffic volume of first M packets in the traffic as a dimension, using a packet transmission rate of the traffic as a dimension, and so on.

It may be understood that the communication network element of this embodiment may be, for example, a network element that may be used to transmit service traffic in the network, for example, a base station controller, a gateway, or various data servers.

In some embodiments of the present invention, the separately calculating similarities between the unknown traffic or the mirror of the unknown traffic and sampled traffic by the traffic analysis server 920 according to N dimensions includes: performing at least two of the following similarity calculation operations:

calculating a similarity between a packet length of the unknown traffic or the mirror of the unknown traffic and a packet length of the sampled traffic;

calculating a similarity between packet payload content of the unknown traffic or the mirror of the unknown traffic and packet payload content of the sampled traffic;

calculating a similarity between a packet port number of the unknown traffic or the mirror of the unknown traffic and a packet port number of the sampled traffic;

calculating a similarity between a packet transmission rate of the unknown traffic or the mirror of the unknown traffic and a packet transmission rate of the sampled traffic;

calculating a similarity between an uplink packet quantity of the unknown traffic or the mirror of the unknown traffic and an uplink packet quantity of the sampled traffic;

calculating a similarity between a downlink packet quantity of the unknown traffic or the mirror of the unknown traffic and a downlink packet quantity of the sampled traffic;

calculating a similarity between a ratio of the uplink packet quantity to the downlink packet quantity of the unknown traffic or the mirror of the unknown traffic and a ratio of the uplink packet quantity to the downlink packet quantity of the sampled traffic;

calculating a similarity between an uplink traffic volume of the unknown traffic or the mirror of the unknown traffic and an uplink traffic volume of the sampled traffic;

calculating a similarity between a downlink traffic volume of the unknown traffic or the mirror of the unknown traffic and a downlink traffic volume of the sampled traffic;

calculating a similarity between a ratio of the uplink traffic volume to the downlink traffic volume of the unknown traffic or the mirror of the unknown traffic and a ratio of the uplink traffic volume to the downlink traffic volume of the sampled traffic; and

calculating a similarity between a traffic volume of first M packets of the unknown traffic or the mirror of the unknown traffic and a traffic volume of first M packets of the sampled traffic.

In some embodiments of the present invention, in respect of the calculating a similarity between packet payload content of the unknown traffic or the mirror of the unknown traffic and packet payload content of the sampled traffic, the traffic analysis server 920 may be specifically configured to: calculate a similarity between characters of the packet payload content of the unknown traffic or the mirror of the unknown traffic and characters of the packet payload content of the sampled traffic; calculate a matching degree between the packet payload content of the unknown traffic or the mirror of the unknown traffic and the packet payload content of the sampled traffic; and calculate a product of a square root of the matching degree and the character similarity, where the product obtained by calculation is the similarity between the packet payload content of the unknown traffic or the mirror of the unknown traffic and the packet payload content of the sampled traffic, and the character similarity is equal to a quantity of same characters between the packet payload content of the unknown traffic or the mirror of the unknown traffic and the packet payload content of the sampled traffic, divided by a total quantity of characters of the packet payload content of the sampled traffic, and the matching degree is equal to 1 minus a differentiation degree between the packet payload content of the unknown traffic or the mirror of the unknown traffic and the packet payload content of the sampled traffic, where the differentiation degree is equal to a quantity of characters, in the packet payload content of the sampled traffic, which are different from characters in the packet payload content of the unknown traffic or the mirror of the unknown traffic, divided by a total quantity of characters of the packet payload content of the sampled traffic.

In some other embodiments of the present invention, in respect of the calculating a similarity between packet payload content of the unknown traffic and packet payload content of the sampled traffic, the traffic analysis server 920 may also be specifically configured to: it is assumed that payload content of the unknown traffic is a string s1, and that payload content of the sampled traffic is a string s2, determine the similarity sim(s1, s2) between the two strings by comparison. Assuming that n different characters are included in the string s1 and string s2, and are c1, c2, ..., cn respectively, determining the similarity between the strings may be changed to determining an angle between vectors v1 and v2 corresponding to the two strings. A greater cosine value indicates a smaller angle between the vectors v1 and v2 corresponding to the two strings and a greater similarity between the string s1 and string s2, that is, a greater similarity between the payload content of the unknown traffic and the payload content of the sampled traffic. Conversely, a less cosine value indicates a larger angle between the vectors v1 and v2 corresponding to the two strings and a less similarity between the string s1 and string s2, that is, a less similarity between the payload content of the unknown traffic and the payload content of the sampled traffic.

In some other embodiments of the present invention, in respect of the calculating a similarity between packet payload content of the unknown traffic and packet payload content of the sampled traffic, the traffic analysis server 920 may also be specifically configured to: it is assumed that payload content of the unknown traffic is a string s1, and that payload content of the sampled traffic is a string s2, use a matrix to record a matching result between two characters corresponding to the two strings in all positions thereof, and if the two characters are matched (the same), record 1, or otherwise, record 0, and then solve one sequence with a longest diagonal in the matrix, where a position corresponding to the sequence is a position of a longest matching substring. For example, a longer longest common substring indicates a greater similarity between two strings, that is, a greater similarity between the payload content of the unknown traffic and the payload content of the sampled traffic. Conversely, a shorter longest common substring indicates a less similarity between two strings, that is, a less similarity between the payload content of the unknown traffic and the payload content of the sampled traffic.

In some embodiments of the present invention, in respect of the calculating a similarity between a packet length of the unknown traffic or the mirror of the unknown traffic and a packet length of the sampled traffic, the traffic analysis server 920 may be specifically configured to: divide the packet length of the unknown traffic or the mirror of the unknown traffic by the packet length of the sampled traffic to obtain a quotient, where the quotient is the similarity between the packet length of the unknown traffic or the mirror of the unknown traffic and the packet length of the sampled traffic; or, determine a first length interval within which the packet length of the unknown traffic or the mirror of the unknown traffic falls, and determine, according to a correspondence relationship between a length interval and a similarity value, a similarity value corresponding to the first length interval, where the similarity value corresponding to the first length interval is the similarity between the packet length of the unknown traffic or the mirror of the unknown traffic and the packet length of the sampled traffic.

It may be understood that content of the unknown traffic and content of the mirror of the unknown traffic are basically the same, and that the matching similarity between the unknown traffic and the sampled traffic is equal to the matching similarity between the mirror of the unknown traffic and the sampled traffic.

It may be understood that in the foregoing examples, the matching similarity is calculated mainly for a piece of unknown traffic and a piece of sampled traffic. For a scenario in which multiple pieces of sampled traffic exist, a matching similarity between the unknown traffic and each piece of sampled traffic may be calculated in a similar way. Likewise, for a corresponding scenario in which multiple pieces of unknown traffic exist, a matching similarity between each piece of unknown traffic and each piece of sampled traffic may also be separately calculated in a similar way. The specific process is not further described herein.

As can be seen from the above, in the solution of the embodiment of the present invention, after obtaining unknown traffic from the communication network element 910, the traffic analysis server 920 identifies the unknown traffic based on a deep packet inspection technology; and when the unknown traffic fails to be identified based on the deep packet inspection technology, the traffic analysis server 920 separately calculates similarities between the unknown traffic and sampled traffic according to N dimensions, and performs weighted harmonic averaging for calculated similarities that are corresponding to the dimensions, to obtain a matching similarity between the unknown traffic and the sampled traffic, where N is an integer greater than or equal to 2. A mechanism that may use a device to analyze similar traffic is provided, which may provide an online analysis capability, help to improve an automation rate and reduce analysis time, and help to improve efficiency of traffic analysis. Because similarities between unknown traffic and sampled traffic are separately calculated according to N dimensions, and the similarities obtained according to the N dimensions are integrated, where the N dimensions include N dimensions of the following dimensions: n1 dimensions related to a packet of the traffic, n2 dimensions related to a session corresponding to the traffic, and n3 dimensions related to the traffic itself, compared with a regular single-dimension matching mechanism, the technical solution put forward by the embodiment of the present invention selects N dimensions from typical dimensions such as n1 dimensions related to a packet of the traffic, n2 dimensions related to a session corresponding to the traffic, and n3 dimensions related to the traffic itself, to perform combinatorial analysis, which helps to greatly improve accuracy of traffic analysis and further helps to provide effective support for charging of related services.

Referring to FIG. 10, an embodiment of the present invention further provides a communication system, which may include:

a communication network element 1010 and a similarity matching server 1020.

The communication network element 1010 is configured to receive unknown traffic, identify the unknown traffic based on a deep packet inspection technology, and if the unknown traffic fails to be identified, send the unidentified unknown traffic or a mirror of the unidentified unknown traffic to the similarity matching server 1020.

The similarity matching server 1020 is configured to receive the unidentified unknown traffic or the mirror of the unknown traffic from the communication network element 1010, and separately calculate similarities between the unknown traffic or the mirror of the unknown traffic and sampled traffic according to N dimensions; and perform weighted harmonic averaging for calculated similarities that are corresponding to the dimensions, to obtain a matching similarity between the unknown traffic or the mirror of the unknown traffic and the sampled traffic, where, N is an integer greater than or equal to 2, and the N dimensions may include N dimensions of the following dimensions: n1 dimensions related to a packet of the traffic, n2 dimensions related to a session corresponding to the traffic, and n3 dimensions related to the traffic itself, where n1, n2, and n3 are positive integers.

It may be understood that content of the unknown traffic and content of the mirror of the unknown traffic are basically the same, and that the matching similarity between the unknown traffic and the sampled traffic is equal to the matching similarity between the mirror of the unknown traffic and the sampled traffic.

The n1 dimensions related to a packet of the traffic are n1 dimensions using packets (for example, packet headers and/or packet payloads) in the traffic as an analysis angle. The n1 dimensions related to a packet of the traffic may include, for example, using a length of a packet in the traffic as a dimension, using payload content of a packet in the traffic as a dimension, and using a port number of a packet in the traffic as a dimension.

The n2 dimensions related to a session corresponding to the traffic are n2 dimensions using the session corresponding to the traffic as an analysis angle. The n2 dimensions related to the session corresponding to the traffic may include, for example, using an uplink packet quantity of the session corresponding to the traffic as a dimension, using a downlink packet quantity of the session corresponding to the traffic as a dimension, using a ratio of the uplink packet quantity to the downlink packet quantity of the session corresponding to the traffic as a dimension, using an uplink traffic volume of the session corresponding to the traffic as a dimension, using a downlink traffic volume of the session corresponding to the traffic as a dimension, and using a ratio of the uplink traffic volume to the downlink traffic volume of the session corresponding to the traffic as a dimension.

The n3 dimensions related to the traffic itself are n3 dimensions using the traffic itself as an analysis angle. The n3 dimensions are unrelated to the payload of each packet in the traffic, and are also unrelated to the session corresponding to the traffic. The n3 dimensions related to the traffic itself may include, for example, using a traffic volume of first M packets in the traffic as a dimension, using a packet transmission rate of the traffic as a dimension, and so on.

It may be understood that the communication network element of this embodiment may be, for example, a network element that may be used to transmit service traffic in the network, for example, a base station controller, a gateway, or various data servers.

In some embodiments of the present invention, in respect of the separately calculating similarities between the unknown traffic or the mirror of the unknown traffic and sampled traffic according to N dimensions, the similarity matching server 1020 may be specifically configured to perform at least two of the following similarity calculation operations:

calculating a similarity between a packet length of the unknown traffic or the mirror of the unknown traffic and a packet length of the sampled traffic;
calculating a similarity between packet payload content of the unknown traffic or the mirror of the unknown traffic and packet payload content of the sampled traffic;
calculating a similarity between a packet port number of the unknown traffic or the mirror of the unknown traffic and a packet port number of the sampled traffic;
calculating a similarity between a packet transmission rate of the unknown traffic or the mirror of the unknown traffic and a packet transmission rate of the sampled traffic;
calculating a similarity between an uplink packet quantity of the unknown traffic or the mirror of the unknown traffic and an uplink packet quantity of the sampled traffic;
calculating a similarity between a downlink packet quantity of the unknown traffic or the mirror of the unknown traffic and a downlink packet quantity of the sampled traffic;
calculating a similarity between a ratio of the uplink packet quantity to the downlink packet quantity of the unknown traffic or the mirror of the unknown traffic and a ratio of the uplink packet quantity to the downlink packet quantity of the sampled traffic;

calculating a similarity between an uplink traffic volume of the unknown traffic or the mirror of the unknown traffic and an uplink traffic volume of the sampled traffic;

calculating a similarity between a downlink traffic volume of the unknown traffic or the mirror of the unknown traffic and a downlink traffic volume of the sampled traffic;

calculating a similarity between a ratio of the uplink traffic volume to the downlink traffic volume of the unknown traffic or the mirror of the unknown traffic and a ratio of the uplink traffic volume to the downlink traffic volume of the sampled traffic; and

calculating a similarity between a traffic volume of first M packets of the unknown traffic or the mirror of the unknown traffic and a traffic volume of first M packets of the sampled traffic.

In some embodiments of the present invention, in respect of the calculating a similarity between packet payload content of the unknown traffic or the mirror of the unknown traffic and packet payload content of the sampled traffic, the similarity matching server 1020 may be specifically configured to: calculate a similarity between characters of the packet payload content of the unknown traffic or the mirror of the unknown traffic and characters of the packet payload content of the sampled traffic; calculate a matching degree between the packet payload content of the unknown traffic or the mirror of the unknown traffic and the packet payload content of the sampled traffic; and calculate a product of a square root of the matching degree and the character similarity, where the product obtained by calculation is the similarity between the packet payload content of the unknown traffic or the mirror of the unknown traffic and the packet payload content of the sampled traffic, and the character similarity is equal to a quantity of same characters between the packet payload content of the unknown traffic or the mirror of the unknown traffic and the packet payload content of the sampled traffic, divided by a total quantity of characters of the packet payload content of the sampled traffic, and the matching degree is equal to 1 minus a differentiation degree between the packet payload content of the unknown traffic or the mirror of the unknown traffic and the packet payload content of the sampled traffic, where the differentiation degree is equal to a quantity of characters, in the packet payload content of the sampled traffic, which are different from characters in the packet payload content of the unknown traffic or the mirror of the unknown traffic, divided by a total quantity of characters of the packet payload content of the sampled traffic.

In some other embodiments of the present invention, in respect of the calculating a similarity between packet payload content of the unknown traffic and packet payload content of the sampled traffic, the similarity matching server 1020 may also be specifically configured to: it is assumed that payload content of the unknown traffic is a string s1, and that payload content of the sampled traffic is a string s2, determine the similarity sim(s1, s2) between the two strings by comparison. Assuming that n different characters are included in the string s1 and string s2, and are c1, c2, ..., cn respectively, determining the similarity between the strings may be changed to determining an angle between vectors v1 and v2 corresponding to the two strings. A greater cosine value indicates a smaller angle between the vectors v1 and v2 corresponding to the two strings and a greater similarity between the string s1 and string s2, that is, a greater similarity between the payload content of the unknown traffic and the payload content of the sampled traffic. Conversely, a less cosine value indicates a larger angle between the vectors v1 and v2 corresponding to the two strings and a less similarity between the string s1 and string s2, that is, a less similarity between the payload content of the unknown traffic and the payload content of the sampled traffic

In some other embodiments of the present invention, in respect of the calculating a similarity between packet payload content of the unknown traffic and packet payload content of the sampled traffic, the similarity matching server 1020 may also be specifically configured to: it is assumed that payload content of the unknown traffic is a string s1, and that payload content of the sampled traffic is a string s2, use a matrix to record a matching result between two characters corresponding to the two strings in all positions thereof, and if the two characters are matched (the same), record 1, or otherwise, record 0, and then solve one sequence with a longest diagonal in the matrix, where a position corresponding to the sequence is a position of a longest matching substring. For example, a longer longest common substring indicates a greater similarity between two strings, that is, a greater similarity between the payload content of the unknown traffic and the payload content of the sampled traffic. Conversely, a shorter longest common substring indicates a less similarity between two strings, that is, a less similarity between the payload content of the unknown traffic and the payload content of the sampled traffic.

In some embodiments of the present invention, in respect of the calculating a similarity between a packet length of the unknown traffic or the mirror of the unknown traffic and a packet length of the sampled traffic, the similarity matching server 1020 may be specifically configured to: divide the packet length of the unknown traffic or the mirror of the unknown traffic by the packet length of the sampled traffic to obtain a quotient, where the quotient is the similarity between the packet length of the unknown traffic or the mirror of the unknown traffic and the packet length of the sampled traffic; or, determine a first length interval within which the packet length of the unknown traffic or the mirror of the unknown traffic falls, and determine, according to a correspondence relationship between a length interval and a similarity value, a similarity value corresponding to the first length interval, where the similarity value corresponding to the first length interval is the similarity between the packet length of the unknown traffic or the mirror of the unknown traffic and the packet length of the sampled traffic.

It may be understood that in the foregoing examples, the matching similarity is calculated mainly for a piece of unknown traffic and a piece of sampled traffic. For a scenario in which multiple pieces of sampled traffic exist, a matching similarity between the unknown traffic and each piece of sampled traffic may be calculated in a similar way. Likewise, for a corresponding scenario in which multiple pieces of unknown traffic exist, a matching similarity between each piece of unknown traffic and each piece of sampled traffic may also be separately calculated in a similar way. The specific process is not further described herein.

As can be seen from the above, in the solution of the embodiment of the present invention, after receiving unknown traffic, the communication network element 1010 identifies the unknown traffic based on a deep packet inspection technology; and when the unknown traffic fails to be identified based on the deep packet inspection technology, the similarity matching server 1020 separately calculates similarities between the unknown traffic and sampled traffic according to N dimensions, and performs weighted harmonic averaging for calculated similarities that are corresponding to the dimensions, to obtain a matching similarity between the unknown traffic and the sampled traffic, where N is an integer greater than or equal to 2. A mechanism that may use a device to analyze similar traffic is provided, which may provide an online analysis capability, help to improve an automation rate and reduce analysis time, and help to improve efficiency of traffic analysis. Because similarities between unknown traffic and sampled traffic are separately calculated according to N dimensions, and the similarities obtained according to the N dimensions are integrated, where the N dimensions include N dimensions of the following dimensions: n1 dimensions related to a packet of the traffic, n2 dimensions related to a session corresponding to the traffic, and n3 dimensions related to the traffic itself, compared with a regular single-dimension matching mechanism, the technical solution put forward by the embodiment of the present invention selects N dimensions from typical dimensions such as n1 dimensions related to a packet of the traffic, n2 dimensions related to a session corresponding to the traffic, and n3 dimensions related to the traffic itself, to perform combinatorial analysis, which helps to greatly improve accuracy of traffic analysis and further helps to provide effective support for charging of related services.

Referring to FIG. 11, an embodiment of the present invention further provides a communication system, which may include:

a communication network element 1110 and a deep packet inspection identification server 1120.

The communication network element 1110 is configured to receive unknown traffic.

The deep packet inspection identification server 1120 is configured to obtain the unknown traffic received by the communication network element 1110 or obtain a mirror of the unknown traffic received by the communication network element 1110; and identify the unknown traffic from the communication network element 1110 based on a deep packet inspection technology, and if the unknown traffic fails to be identified, send the unidentified unknown traffic or the mirror of the unidentified unknown traffic to the communication network element 1110.

The communication network element 1110 is further configured to receive the unidentified unknown traffic or the mirror of the unknown traffic from the deep packet inspection identification server 1120, and separately calculate similarities between the unknown traffic or the mirror of the unknown traffic and sampled traffic according to N dimensions; and perform weighted harmonic averaging for calculated similarities that are corresponding to the dimensions, to obtain a matching similarity between the unknown traffic or the mirror of the unknown traffic and the sampled traffic, where, N is an integer greater than or equal to 2, and the N dimensions may include N dimensions of the following dimensions: n1 dimensions related to a packet of the traffic, n2 dimensions related to a session corresponding to the traffic, and n3 dimensions related to the traffic itself, where n1, n2, and n3 are positive integers.

It may be understood that content of the unknown traffic and content of the mirror of the unknown traffic are basically the same, and that the matching similarity between the unknown traffic and the sampled traffic is equal to the matching similarity between the mirror of the unknown traffic and the sampled traffic.

The n1 dimensions related to a packet of the traffic are n1 dimensions using packets (for example, packet headers and/or packet payloads) in the traffic as an analysis angle. The n1 dimensions related to a packet of the traffic may include, for example, using a length of a packet in the traffic as a dimension, using payload content of a packet in the traffic as a dimension, and using a port number of a packet in the traffic as a dimension.

The n2 dimensions related to a session corresponding to the traffic are n2 dimensions using the session corresponding to the traffic as an analysis angle. The n2 dimensions related to the session corresponding to the traffic may include, for example, using an uplink packet quantity of the session corresponding to the traffic as a dimension, using a downlink packet quantity of the session corresponding to the traffic as a dimension, using a ratio of the uplink packet quantity to the downlink packet quantity of the session corresponding to the traffic as a dimension, using an uplink traffic volume of the session corresponding to the traffic as a dimension, using a downlink traffic volume of the session corresponding to the traffic as a dimension, and using a ratio of the uplink traffic volume to the downlink traffic volume of the session corresponding to the traffic as a dimension.

The n3 dimensions related to the traffic itself are n3 dimensions using the traffic itself as an analysis angle. The n3 dimensions are unrelated to the payload of each packet in the traffic, and are also unrelated to the session corresponding to the traffic. The n3 dimensions related to the traffic itself may include, for example, using a traffic volume of first M packets in the traffic as a dimension, using a packet transmission rate of the traffic as a dimension, and so on.

It may be understood that the communication network element 1110 of this embodiment may be, for example, a network element that may be used to transmit service traffic in the network, for example, a base station controller, a gateway, or various data servers.

In some embodiments of the present invention, in respect of the separately calculating similarities between the unknown traffic or the mirror of the unknown traffic and sampled traffic according to N dimensions, the communication network element 1110 may be specifically configured to perform at least two of the following similarity calculation operations:

calculating a similarity between a packet length of the unknown traffic or the mirror of the unknown traffic and a packet length of the sampled traffic;

calculating a similarity between packet payload content of the unknown traffic or the mirror of the unknown traffic and packet payload content of the sampled traffic;

calculating a similarity between a packet port number of the unknown traffic or the mirror of the unknown traffic and a packet port number of the sampled traffic;

calculating a similarity between a packet transmission rate of the unknown traffic or the mirror of the unknown traffic and a packet transmission rate of the sampled traffic;

calculating a similarity between an uplink packet quantity of the unknown traffic or the mirror of the unknown traffic and an uplink packet quantity of the sampled traffic;

calculating a similarity between a downlink packet quantity of the unknown traffic or the mirror of the unknown traffic and a downlink packet quantity of the sampled traffic;

calculating a similarity between a ratio of the uplink packet quantity to the downlink packet quantity of the unknown traffic or the mirror of the unknown traffic and a ratio of the uplink packet quantity to the downlink packet quantity of the sampled traffic;

calculating a similarity between an uplink traffic volume of the unknown traffic or the mirror of the unknown traffic and an uplink traffic volume of the sampled traffic;

calculating a similarity between a downlink traffic volume of the unknown traffic or the mirror of the unknown traffic and a downlink traffic volume of the sampled traffic;

calculating a similarity between a ratio of the uplink traffic volume to the downlink traffic volume of the unknown traffic or the mirror of the unknown traffic and a ratio of the uplink traffic volume to the downlink traffic volume of the sampled traffic; and

calculating a similarity between a traffic volume of first M packets of the unknown traffic or the mirror of the unknown traffic and a traffic volume of first M packets of the sampled traffic.

In some embodiments of the present invention, in respect of the calculating a similarity between packet payload content of the unknown traffic or the mirror of the unknown traffic and packet payload content of the sampled traffic, the communication network element 1110 may be specifically configured to: calculate a similarity between characters of the packet payload content of the unknown traffic or the mirror of the unknown traffic and characters of the packet payload content of the sampled traffic; calculate a matching degree between the packet payload content of the unknown traffic or the mirror of the unknown traffic and the packet payload content of the sampled traffic; and calculate a product of a square root of the matching degree and the character similarity, where the product obtained by calculation is the similarity between the packet payload content of the unknown traffic or the mirror of the unknown traffic and the packet payload content of the sampled traffic, and the character similarity is equal to a quantity of same characters between the packet payload content of the unknown traffic or the mirror of the unknown traffic and the packet payload content of the sampled traffic, divided by a total quantity of characters of the packet payload content of the sampled traffic, and the matching degree is equal to 1 minus a differentiation degree between the packet payload content of the unknown traffic or the mirror of the unknown traffic and the packet payload content of the sampled traffic, where the differentiation degree is equal to a quantity of characters, in the packet payload content of the sampled traffic, which are different from characters in the packet payload content of the unknown traffic or the mirror of the unknown traffic, divided by a total quantity of characters of the packet payload content of the sampled traffic.

In some other embodiments of the present invention, in respect of the calculating a similarity between packet payload content of the unknown traffic and packet payload content of the sampled traffic, the communication network element 1110 may also be specifically configured to: it is assumed that payload content of the unknown traffic is a string s1, and that payload content of the sampled traffic is a string s2, determine the similarity sim(s1, s2) between the two strings by comparison. Assuming that n different characters are included in the string s1 and string s2, and are c1, c2, ...,

cn respectively, determining the similarity between the strings may be changed to determining an angle between vectors v1 and v2 corresponding to the two strings. A greater cosine value indicates a smaller angle between the vectors v1 and v2 corresponding to the two strings and a greater similarity between the string s1 and string s2, that is, a greater similarity between the payload content of the unknown traffic and the payload content of the sampled traffic. Conversely, a less cosine value indicates a larger angle between the vectors v1 and v2 corresponding to the two strings and a less similarity between the string s1 and string s2, that is, a less similarity between the payload content of the unknown traffic and the payload content of the sampled traffic.

In some other embodiments of the present invention, in respect of the calculating a similarity between packet payload content of the unknown traffic and packet payload content of the sampled traffic, the communication network element 1110 may also be specifically configured to: it is assumed that payload content of the unknown traffic is a string s1, and that payload content of the sampled traffic is a string s2, use a matrix to record a matching result between two characters corresponding to the two strings in all positions thereof, and if the two characters are matched (the same), record 1, or otherwise, record 0, and then solve one sequence with a longest diagonal in the matrix, where a position corresponding to the sequence is a position of a longest matching substring. For example, a longer longest common substring indicates a greater similarity between two strings, that is, a greater similarity between the payload content of the unknown traffic and the payload content of the sampled traffic. Conversely, a shorter longest common substring indicates a less similarity between two strings, that is, a less similarity between the payload content of the unknown traffic and the payload content of the sampled traffic.

In some embodiments of the present invention, in respect of the calculating a similarity between a packet length of the unknown traffic or the mirror of the unknown traffic and a packet length of the sampled traffic, the communication network element 1110 may be specifically configured to: divide the packet length of the unknown traffic or the mirror of the unknown traffic by the packet length of the sampled traffic to obtain a quotient, where the quotient is the similarity between the packet length of the unknown traffic or the mirror of the unknown traffic and the packet length of the sampled traffic; or, determine a first length interval within which the packet length of the unknown traffic or the mirror of the unknown traffic falls, and determine, according to a correspondence relationship between a length interval and a similarity value, a similarity value corresponding to the first length interval, where the similarity value corresponding to the first length interval is the similarity between the packet length of the unknown traffic or the mirror of the unknown traffic and the packet length of the sampled traffic.

It may be understood that in the foregoing examples, the matching similarity is calculated mainly for a piece of unknown traffic and a piece of sampled traffic. For a scenario in which multiple pieces of sampled traffic exist, a matching similarity between the unknown traffic and each piece of sampled traffic may be calculated in a similar way. Likewise, for a corresponding scenario in which multiple pieces of unknown traffic exist, a matching similarity between each piece of unknown traffic and each piece of sampled traffic may also be separately calculated in a similar way. The specific process is not further described herein.

As can be seen from the above, in the solution of the embodiment of the present invention, the deep packet inspection identification server 1120 obtains unknown traffic from the communication network element 1110, and identifies the unknown traffic from the communication network element 1110 based on a deep packet inspection technology, and if the unknown traffic fails to be identified, the deep packet inspection identification server 1120 sends the unidentified unknown traffic to the communication network element 1110; and after receiving the unknown traffic, the communication network element 1110 separately calculates similarities between the unknown traffic and sampled traffic according to N dimensions, and the communication network element 1110 performs weighted harmonic averaging for calculated similarities that are corresponding to the dimensions, to obtain a matching similarity between the unknown traffic and the sampled traffic, where, N is an integer greater than or equal to 2. A mechanism that may use a device to analyze similar traffic is provided, which may provide an online analysis capability, help to improve an automation rate and reduce analysis time, and help to improve efficiency of traffic analysis. Because similarities between unknown traffic and sampled traffic are separately calculated according to N dimensions, and the similarities obtained according to the N dimensions are integrated, where the N dimensions include N dimensions of the following dimensions: n1 dimensions related to a packet of the traffic, n2 dimensions related to a session corresponding to the traffic, and n3 dimensions related to the traffic itself, compared with a regular single-dimension matching mechanism, the technical solution put forward by the embodiment of the present invention selects N dimensions from typical dimensions such as n1 dimensions related to a packet of the traffic, n2 dimensions related to a session corresponding to the traffic, and n3 dimensions related to the traffic itself, to perform combinatorial analysis, which helps to greatly improve accuracy of traffic analysis and further helps to provide effective support for charging of related services.

Referring to FIG. 12, an embodiment of the present invention further provides a communication system, which may include:

a communication network element 1210, a deep packet inspection identification server 1220, and a similarity matching server 1230.

The communication network element 1210 is configured to receive unknown traffic.

The deep packet inspection identification server 1220 is configured to obtain the unknown traffic received by the communication network element 1210 or obtain a mirror of the unknown traffic received by the communication network element 1210; and identify, based on a deep packet inspection technology, the unknown traffic or the mirror of the unknown traffic received by the communication network element 1210, and if the unknown traffic or the mirror of the unknown traffic fails to be identified, send the unidentified unknown traffic or the mirror of the unidentified unknown traffic to the similarity matching server 1230.

The similarity matching server 1230 is configured to receive the unidentified unknown traffic or the mirror of the unknown traffic from the deep packet inspection identification server 1220, and separately calculate similarities between the unknown traffic or the mirror of the unknown traffic and sampled traffic according to N dimensions; and perform weighted harmonic averaging for calculated similarities that are corresponding to the dimensions, to obtain a matching similarity between the unknown traffic or the mirror of the unknown traffic and the sampled traffic, where, the N dimensions may include N dimensions of the following dimensions: n1 dimensions related to a packet of the traffic, n2 dimensions related to a session corresponding to the traffic, and n3 dimensions related to the traffic itself, where n1, n2, and n3 are positive integers.

It may be understood that content of the unknown traffic and content of the mirror of the unknown traffic are basically the same, and that the matching similarity between the unknown traffic and the sampled traffic is equal to the matching similarity between the mirror of the unknown traffic and the sampled traffic.

The n1 dimensions related to a packet of the traffic are n1 dimensions using packets (for example, packet headers and/or packet payloads) in the traffic as an analysis angle. The n1 dimensions related to a packet of the traffic may include, for example, using a length of a packet in the traffic as a dimension, using payload content of a packet in the traffic as a dimension, and using a port number of a packet in the traffic as a dimension.

The n2 dimensions related to a session corresponding to the traffic are n2 dimensions using the session corresponding to the traffic as an analysis angle. The n2 dimensions related to the session corresponding to the traffic may include, for example, using an uplink packet quantity of the session corresponding to the traffic as a dimension, using a downlink packet quantity of the session corresponding to the traffic as a dimension, using a ratio of the uplink packet quantity to the downlink packet quantity of the session corresponding to the traffic as a dimension, using an uplink traffic volume of the session corresponding to the traffic as a dimension, using a downlink traffic volume of the session corresponding to the traffic as a dimension, and using a ratio of the uplink traffic volume to the downlink traffic volume of the session corresponding to the traffic as a dimension.

The n3 dimensions related to the traffic itself are n3 dimensions using the traffic itself as an analysis angle. The n3 dimensions are unrelated to the payload of each packet in the traffic, and are also unrelated to the session corresponding to the traffic. The n3 dimensions related to the traffic itself may include, for example, using a traffic volume of first M packets in the traffic as a dimension, using a packet transmission rate of the traffic as a dimension, and so on.

It may be understood that the communication network element of this embodiment may be, for example, a network element that may be used to transmit service traffic in the network, for example, a base station controller, a gateway, or various data servers.

In some embodiments of the present invention, in respect of the separately calculating similarities between the unknown traffic or the mirror of the unknown traffic and sampled traffic according to N dimensions, the similarity matching server 1230 may be specifically configured to perform at least two of the following similarity calculation operations:

calculating a similarity between a packet length of the unknown traffic or the mirror of the unknown traffic and a packet length of the sampled traffic;

calculating a similarity between packet payload content of the unknown traffic or the mirror of the unknown traffic and packet payload content of the sampled traffic;

calculating a similarity between a packet port number of the unknown traffic or the mirror of the unknown traffic and a packet port number of the sampled traffic;

calculating a similarity between a packet transmission rate of the unknown traffic or the mirror of the unknown traffic and a packet transmission rate of the sampled traffic;

calculating a similarity between an uplink packet quantity of the unknown traffic or the mirror of the unknown traffic and an uplink packet quantity of the sampled traffic;

calculating a similarity between a downlink packet quantity of the unknown traffic or the mirror of the unknown traffic and a downlink packet quantity of the sampled traffic;

calculating a similarity between a ratio of the uplink packet quantity to the downlink packet quantity of the unknown traffic or the mirror of the unknown traffic and a ratio of the uplink packet quantity to the downlink packet quantity of the sampled traffic;

calculating a similarity between an uplink traffic volume of the unknown traffic or the mirror of the unknown traffic and an uplink traffic volume of the sampled traffic;

calculating a similarity between a downlink traffic volume of the unknown traffic or the mirror of the unknown traffic and a downlink traffic volume of the sampled traffic;

calculating a similarity between a ratio of the uplink traffic volume to the downlink traffic volume of the unknown traffic or the mirror of the unknown traffic and a ratio of the uplink traffic volume to the downlink traffic volume of the sampled traffic; and

calculating a similarity between a traffic volume of first M packets of the unknown traffic or the mirror of the unknown traffic and a traffic volume of first M packets of the sampled traffic.

In some embodiments of the present invention, in respect of the calculating a similarity between packet payload content of the unknown traffic or the mirror of the unknown traffic and packet payload content of the sampled traffic, the similarity matching server 1230 may be specifically configured to: calculate a similarity between characters of the packet payload content of the unknown traffic or the mirror of the unknown traffic and characters of the packet payload content of the sampled traffic; calculate a matching degree between the packet payload content of the unknown traffic or the mirror of the unknown traffic and the packet payload content of the sampled traffic; and calculate a product of a square root of the matching degree and the character similarity, where the product obtained by calculation is the similarity between the packet payload content of the unknown traffic or the mirror of the unknown traffic and the packet payload content of the sampled traffic, and the character similarity is equal to a quantity of same characters between the packet payload content of the unknown traffic or the mirror of the unknown traffic and the packet payload content of the sampled traffic, divided by a total quantity of characters of the packet payload content of the sampled traffic, and the matching degree is equal to 1 minus a differentiation degree between the packet payload content of the unknown traffic or the mirror of the unknown traffic and the packet payload content of the sampled traffic, where the differentiation degree is equal to a quantity of characters, in the packet payload content of the sampled traffic, which are different from characters in the packet payload content of the unknown traffic or the mirror of the unknown traffic, divided by a total quantity of characters of the packet payload content of the sampled traffic.

In some other embodiments of the present invention, in respect of the calculating a similarity between packet payload content of the unknown traffic and packet payload content of the sampled traffic, the similarity matching server 1230 may also be specifically configured to: it is assumed that payload content of the unknown traffic is a string s1, and that payload content of the sampled traffic is a string s2, determine the similarity sim(s1, s2) between the two strings by comparison. Assuming that n different characters are included in the string s1 and string s2, and are c1, c2, ..., cn respectively, determining the similarity between the strings may be changed to determining an angle between vectors v1 and v2 corresponding to the two strings. A greater cosine value indicates a smaller angle between the vectors v1 and v2 corresponding to the two strings and a greater similarity between the string s1 and string s2, that is, a greater similarity between the payload content of the unknown traffic and the payload content of the sampled traffic. Conversely, a less cosine value indicates a larger angle between the vectors v1 and v2 corresponding to the two strings and a less similarity between the string s1 and string s2, that is, a less similarity between the payload content of the unknown traffic and the payload content of the sampled traffic.

In some other embodiments of the present invention, in respect of the calculating a similarity between packet payload content of the unknown traffic and packet payload content of the sampled traffic, the similarity matching server 1230 may also be specifically configured to: it is assumed that payload content of the unknown traffic is a string s1, and that payload content of the sampled traffic is a string s2, use a matrix to record a matching result between two characters corresponding to the two strings in all positions thereof, and if the two characters are matched (the same), record 1, or otherwise, record 0, and then solve one sequence with a longest diagonal in the matrix, where a position corresponding to the sequence is a position of a longest matching substring. For example, a longer longest common substring indicates a greater similarity between two strings, that is, a greater similarity between the payload content of the unknown traffic and the payload content of the sampled traffic. Conversely, a shorter longest common substring indicates a less similarity between two strings, that is, a less similarity between the payload content of the unknown traffic and the payload content of the sampled traffic.

In some embodiments of the present invention, in respect of the calculating a similarity between a packet length of the unknown traffic or the mirror of the unknown traffic and a packet length of the sampled traffic, the similarity matching server 1230 may be specifically configured to: divide the packet length of the unknown traffic or the mirror of the unknown traffic by the packet length of the sampled traffic to obtain a quotient, where the quotient is the similarity between the packet length of the unknown traffic or the mirror of the unknown traffic and the packet length of the sampled traffic; or, determine a first length interval within which the packet length of the unknown traffic or the mirror of the unknown traffic falls, and determine, according to a correspondence relationship between a length interval and a similarity value, a similarity value corresponding to the first length interval, where the similarity value corresponding to the first length interval is the similarity between the packet length of the unknown traffic or the mirror of the unknown traffic and the packet length of the sampled traffic.

It may be understood that in the foregoing examples, the matching similarity is calculated mainly for a piece of unknown traffic and a piece of sampled traffic. For a scenario in which multiple pieces of sampled traffic exist, a matching similarity between the unknown traffic and each piece of sampled traffic may be calculated in a similar way. Likewise, for a corresponding scenario in which multiple pieces of unknown traffic exist, a matching similarity between each piece of unknown traffic and each piece of sampled traffic may also be separately calculated in a similar way. The specific process is not further described herein.

As can be seen from the above, in the solution of the embodiment of the present invention, the deep packet inspection identification server 1220 obtains unknown traffic from the communication network element 1210, and identifies the unknown traffic from the communication network element 1010 based on a deep packet inspection technology, and if the unknown traffic fails to be identified, the deep packet inspection identification server 1220 sends the unidentified unknown traffic to the similarity matching server 1230; and after receiving the unknown traffic, the similarity matching server 1230 separately calculates similarities between the unknown traffic and sampled traffic according to N dimensions, and performs weighted harmonic averaging for calculated similarities that are corresponding to the dimensions, to obtain a matching similarity between the unknown traffic and the sampled traffic, where, N is an integer greater than or equal to 2. A mechanism that may use a device to analyze similar traffic is provided, which may provide an online analysis capability, help to improve an automation rate and reduce analysis time, and help to improve efficiency of traffic analysis. Because similarities between unknown traffic and sampled traffic are separately calculated according to N dimensions, and the similarities obtained according to the N dimensions are integrated, where the N dimensions include N dimensions of the following dimensions: n1 dimensions related to a packet of the traffic, n2 dimensions related to a session corresponding to the traffic, and n3 dimensions related to the traffic itself, compared with a regular single-dimension matching mechanism, the technical solution put forward by the embodiment of the present invention selects N dimensions from typical dimensions such as n1 dimensions related to a packet of the traffic, n2 dimensions related to a session corresponding to the traffic, and n3 dimensions related to the traffic itself, to perform combinatorial analysis, which helps to greatly improve accuracy of traffic analysis and further helps to provide effective support for charging of related services.

FIG. 13 shows a structure of a similarity matching server 1300 according to an embodiment of the present invention. The similarity matching server 1300 includes: at least one processor 1301, for example, a central processing unit(CPU), at least one network interface 1304 or a user interfaces 1303, a memory 1305, and at least one communication bus 1302. The communication bus 1302 is configured to implement connection and communication between the components. The similarity matching server 1300 optionally includes a user interface 1303, including a display, a keyboard, or a clicking device (for example, a mouse, a trackball (trackball), a touch pad, or a touch screen). The memory 1305 may include a high-speed RAM memory, and may also include a non-volatile memory (non-volatile memory), for example, at least one disk memory. The memory 1305 may optionally include a storage apparatus located far away from the processor 1301.

In some implementation manners, the memory 1305 stores the following elements: an executable module or a data structure, or a subset thereof, or an extension set thereof:

an operating system 13051, including various system programs and configured to implement various basic services and process hardware-based tasks; and
an application program module 13052, including various application programs and configured to implement various application services.

The application program module 13052 includes but is not limited to an obtaining unit 510 and a similarity calculating unit 520.

Specific implementation of various modules in the application program module 13052 is not further described herein. For details, reference may be made to the corresponding modules in the embodiment shown in FIG. 5.

In some embodiments of the present invention, by invoking programs or instructions stored in the memory 1305, the processor 1301 may be configured to obtain unknown traffic; and separately calculate similarities between the unknown traffic and sampled traffic according to N dimensions; and perform weighted harmonic averaging for calculated similarities that are corresponding to the dimensions, to obtain a matching similarity between the unknown traffic and the sampled traffic, where, N is an integer greater than or equal to 2.

In some embodiments of the present invention, the processor 1301 may separately calculate the similarities between the unknown traffic and the sampled traffic according to the N dimensions when the unknown traffic fails to be identified based on a deep packet inspection technology; and perform weighted harmonic averaging for the calculated similarities that are corresponding to the dimensions, to obtain the matching similarity between the unknown traffic and the sampled traffic, where, N is an integer greater than or equal to 2.

The N dimensions may include N dimensions of the following dimensions: n1 dimensions related to a packet of the traffic, n2 dimensions related to a session corresponding to the traffic, and n3 dimensions related to the traffic itself, where n1, n2, and n3 are positive integers.

The n1 dimensions related to a packet of the traffic are n1 dimensions using packets (for example, packet headers and/or packet payloads) in the traffic as an analysis angle. The n1 dimensions related to a packet of the traffic may include, for example, using a length of a packet in the traffic as a dimension, using payload content of a packet in the traffic as a dimension, and using a port number of a packet in the traffic as a dimension.

The n2 dimensions related to a session corresponding to the traffic are n2 dimensions using the session corresponding to the traffic as an analysis angle. The n2 dimensions related to the session corresponding to the traffic may include, for example, using an uplink packet quantity of the session corresponding to the traffic as a dimension, using a downlink packet quantity of the session corresponding to the traffic as a dimension, using a ratio of the uplink packet quantity to the downlink packet quantity of the session corresponding to the traffic as a dimension, using an uplink traffic volume of the session corresponding to the traffic as a dimension, using a downlink traffic volume of the session corresponding to the traffic as a dimension, and using a ratio of the uplink traffic volume to the downlink traffic volume of the session corresponding to the traffic as a dimension.

The n3 dimensions related to the traffic itself are n3 dimensions using the traffic itself as an analysis angle. The n3 dimensions are unrelated to the payload of each packet in the traffic, and are also unrelated to the session corresponding to the traffic. The n3 dimensions related to the traffic itself may include, for example, using a traffic volume of first M packets in the traffic as a dimension, using a packet transmission rate of the traffic as a dimension, and so on.

In some embodiments of the present invention, if the obtained matching similarity between the sampled traffic and the unknown traffic is greater than a set similarity threshold, the processor 1301 may output a traffic identification result indicating successful matching between the unknown traffic and the sampled traffic (where the traffic identification result may indicate, for example, that the unknown traffic and the sampled traffic are of a same service type. In this case, charging for the unknown traffic may be performed according to a package charging mode corresponding to the service type of the sampled traffic. For example, an Fk1 package service exists, all traffic for a user to access the Fk1 is free, and separate charging is performed for external video traffic and advertisement traffic of the Fk1. Other service scenarios are deduced in the same way). In addition, if the obtained matching similarity between the sampled traffic and the unknown traffic is less than the set similarity threshold, the processor 1301 may output a traffic identification result indicating failed matching between the unknown traffic and the sampled traffic.

The processor 1301 may select, according to actual requirements, a dimension used for identification. Selected dimensions may vary according to different application scenarios and different accuracy requirements. For example, the processor 1301 may select at least two dimensions from the following dimensions to calculate the similarities between the unknown traffic and the sampled traffic: packet payload content, a packet length, a packet port number, a packet transmission rate, an uplink packet quantity, a downlink packet quantity, a ratio of the uplink packet quantity to the downlink packet quantity, an uplink traffic volume, a downlink traffic volume, a ratio of the uplink traffic volume to the downlink traffic volume, a traffic volume of first M packets, and so on. Certainly, the embodiment of the present invention is not limited to the foregoing similarity comparison dimensions, and other dimensions may also be introduced.

In some embodiments of the present invention, in respect of the separately calculating similarities between the unknown traffic and sampled traffic according to N dimensions, the processor 1301 may be specifically configured to perform at least two of the following similarity calculation operations:

calculating a similarity between a packet length of the unknown traffic and a packet length of the sampled traffic;
calculating a similarity between packet payload content of the unknown traffic and packet payload content of the sampled traffic;
calculating a similarity between a packet port number of the unknown traffic and a packet port number of the sampled traffic;
calculating a similarity between a packet transmission rate of the unknown traffic and a packet transmission rate of the sampled traffic;
calculating a similarity between an uplink packet quantity of the unknown traffic and an uplink packet quantity of the sampled traffic;
calculating a similarity between a downlink packet quantity of the unknown traffic and a downlink packet quantity of the sampled traffic;
calculating a similarity between a ratio of the uplink packet quantity to the downlink packet quantity of the unknown traffic and a ratio of the uplink packet quantity to the downlink packet quantity of the sampled traffic;
calculating a similarity between an uplink traffic volume of the unknown traffic and an uplink traffic volume of the sampled traffic;
calculating a similarity between a downlink traffic volume of the unknown traffic and a downlink traffic volume of the sampled traffic;
calculating a similarity between a ratio of the uplink traffic volume to the downlink traffic volume of the unknown traffic and a ratio of the uplink traffic volume to the downlink traffic volume of the sampled traffic; and
calculating a similarity between a traffic volume of first M packets of the unknown traffic and a traffic volume of first M packets of the sampled traffic.

In an actual application, multiple manners compliant with the computation logic in the field may be used to calculate a similarity between the unknown traffic and the sampled traffic according to a corresponding dimension. For example, in respect of the calculating a similarity between packet payload content of the unknown traffic and packet payload content of the sampled traffic, the processor 1301 may be specifically configured to: calculate a similarity between characters of the packet payload content of the unknown traffic and characters of the packet payload content of the sampled traffic; calculate a matching degree between the packet payload content of the unknown traffic and the packet payload content of the sampled traffic; and calculate a product of a square root of the matching degree and the character similarity, where the product is the similarity between the packet payload content of the unknown traffic and the packet payload content of the sampled traffic, and the character similarity is equal to a quantity of same characters between the packet payload content of the unknown traffic and the packet payload content of the sampled traffic, divided by a total quantity of characters of the packet payload content of the sampled traffic, and the matching degree is equal to 1 minus a differentiation degree between the packet payload content of the unknown traffic and the packet payload content of the sampled traffic, where the differentiation degree is equal to a quantity of characters, in the packet payload content of the sampled traffic, which are different from characters in the packet payload content of the unknown traffic, divided by a total quantity of characters of the packet payload content of the sampled traffic.

In some other embodiments of the present invention, in respect of the calculating a similarity between packet payload content of the unknown traffic and packet payload content of the sampled traffic, the processor 1301 may also be specifically configured to: it is assumed that payload content of the unknown traffic is a string s1, and that payload content of the sampled traffic is a string s2, determine the similarity sim(s1, s2) between the two strings by comparison. Assuming that n different characters are included in the string s1 and string s2, and are c1, c2, ..., cn respectively, determining the similarity between the strings may be changed to determining an angle between vectors v1 and v2 corresponding to the two strings. A greater cosine value indicates a smaller angle between the vectors v1 and v2 corresponding to the two strings and a greater similarity between the string s1 and string s2, that is, a greater similarity between the payload content of the unknown traffic and the payload content of the sampled traffic. Conversely, a less cosine value indicates a larger angle between the vectors v1 and v2 corresponding to the two strings and a less similarity between the string s1 and string s2, that is, a less similarity between the payload content of the unknown traffic and the payload content of the sampled traffic.

In some other embodiments of the present invention, in respect of the calculating a similarity between packet payload content of the unknown traffic and packet payload content of the sampled traffic, the processor 1301 may also be specifically configured to: it is assumed that payload content of the unknown traffic is a string s1, and that payload content of the sampled traffic is a string s2, use a matrix to record a matching result between two characters corresponding to the two strings in all positions thereof, and if the two characters are matched (the same), record 1, or otherwise, record 0, and then solve one sequence with a longest diagonal in the matrix, where a position corresponding to the sequence is a position of a longest matching substring. For example, a longer longest common substring indicates a greater similarity between two strings, that is, a greater similarity between the payload content of the unknown traffic and the payload content of the sampled traffic. Conversely, a shorter longest common substring indicates a less similarity between two strings, that is, a less similarity between the payload content of the unknown traffic and the payload content of the sampled traffic.

In some embodiments of the present invention, in respect of the calculating a similarity between a packet length of the unknown traffic and a packet length of the sampled traffic, the processor 1301 may be specifically configured to divide the packet length of the unknown traffic by the packet length of the sampled traffic to obtain a quotient, where the quotient is the similarity between the packet length of the unknown traffic and the packet length of the sampled traffic; or, determine a first length interval within which the packet length of the unknown traffic falls, and determine, according to a correspondence relationship between a length interval and a similarity value, a similarity value corresponding to the first length interval, where the similarity value corresponding to the first length interval is the similarity between the packet length of the unknown traffic and the packet length of the sampled traffic.

Manners of calculating similarities corresponding to other dimensions may be deduced in the same way, and are not further enumerated one by one herein.

It may be understood that the similarity matching server 1300 in this embodiment may be used to implement a part or all of the technical solutions in the foregoing method embodiments. The functions of each functional unit of the similarity matching server 1300 may be implemented according to the method in the foregoing method embodiments. The specific implementation process is not further described herein. For details, reference may be made to related descriptions in the foregoing embodiments.

It may be understood that in the foregoing examples, the matching similarity is calculated mainly for a piece of unknown traffic and a piece of sampled traffic. For a scenario in which multiple pieces of sampled traffic exist, a matching similarity between the unknown traffic and each piece of sampled traffic may be calculated in a similar way. Likewise, for a corresponding scenario in which multiple pieces of unknown traffic exist, a matching similarity between each piece of unknown traffic and each piece of sampled traffic may also be separately calculated in a similar way. The specific process is not further described herein.

As can be seen from the above, after the solution is used, after obtaining unknown traffic, the processor 1301 separately calculates similarities between the unknown traffic and sampled traffic according to N dimensions; and performs weighted harmonic averaging for calculated similarities that are corresponding to the dimensions, to obtain a matching similarity between the unknown traffic and the sampled traffic, where, N is an integer greater than or equal to 2. A mechanism that uses the similarity matching server 1300 to analyze similar traffic is provided, which may provide an online analysis capability, help to improve an automation rate and reduce analysis time, and help to improve efficiency of traffic analysis. Because similarities between unknown traffic and sampled traffic are separately calculated according to N dimensions, and the similarities obtained according to the N dimensions are integrated, where the N dimensions include N dimensions of the following dimensions: n1 dimensions related to a packet of the traffic, n2 dimensions related to a session corresponding to the traffic, and n3 dimensions related to the traffic itself, compared with a regular single-dimension matching mechanism, the technical solution put forward by the embodiment of the present invention selects N dimensions from typical dimensions such as n1 dimensions related to a packet of the traffic, n2 dimensions related to a session corresponding to the traffic, and n3 dimensions related to the traffic itself, to perform combinatorial analysis, which helps to greatly improve accuracy of traffic analysis and further helps to provide effective support for charging of related services.

Referring to FIG. 14-a, an embodiment of the present invention further provides a communication network element 1400, including a transceiver 1401 and a processor 1403 coupled with the transceiver and configured to perform network communication. The communication network element 1400 may further include: a similarity identification engine 1402 coupled with the transceiver 1401, where the similarity identification engine 1402 may be, for example, the similarity matching apparatus 500.

In some embodiments of the present invention, as shown in FIG. 14-b, the communication network element 1400 may further include a DPI identification engine 1404 coupled with the transceiver 1401. The DPI identification engine 1404 may be configured to obtain unknown traffic, and identify the unknown traffic based on a deep packet inspection technology.

Referring to FIG. 15-a, an embodiment of the present invention further provides a traffic analysis server 1500, where the traffic analysis server 1500 may include: a receiver 1501 configured to receive unknown traffic or a mirror of unknown traffic, a similarity identification engine 1502 coupled with the receiver 1501, and a transmitter 1503 configured to send a matching similarity between the unknown traffic and sampled traffic, or send a matching similarity between the mirror of the unknown traffic and sampled traffic, or send a matching similarity between the unknown traffic output by the similarity identification engine 1502 and sampled traffic, or send a matching similarity between the mirror of the unknown traffic output by the similarity identification engine 1502 and sampled traffic,, where the similarity identification engine 1502 may be, for example, the similarity matching apparatus 500.

In some embodiments of the present invention, as shown in FIG. 15-b, the traffic analysis server 1500 may further include a DPI identification engine 1504 coupled with the receiver 1501, where the DPI identification engine 1504 may be configured to obtain unknown traffic or a mirror of unknown traffic, and identify the unknown traffic or the mirror of the unknown traffic based on a deep packet inspection technology.

An embodiment of the present invention further provides a computer storage medium. The computer storage medium may store a program. When being executed, the program performs all or a part of the steps of the similarity matching method or traffic analysis method described in the foregoing method embodiments.

It should be noted that, for ease of description in the method embodiments above, the method is described as a series of actions. Persons skilled in the art should be aware that the present invention is not limited by the described sequence of the actions, because some steps may be performed in any other sequence or performed simultaneously according to the present invention. In addition, persons skilled in the art should be aware that the embodiments in the specification are exemplary embodiments and that actions and modules involved in these embodiments are not mandatory for the present invention.

In the foregoing embodiments, each embodiment has its emphasis. What is not detailed in one embodiment is detailed in the related description of another embodiment.

In the several embodiments provided in the present application, it should be understood that the disclosed apparatus may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a read-only memory (ROM, Read-Only Memory), a random access memory (RAM, Random Access Memory), a removable hard disk, a magnetic disk, or an optical disc.

The foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of corresponding technical solutions to depart from the scope of the technical solutions of the embodiments of the present invention.

**Claims**

1. A similarity matching method, comprising:

   obtaining (101) unknown traffic;
   **characterised in that** the method further comprises:

   separately calculating (102) similarities between the unknown traffic and sampled traffic according to N dimensions; and performing weighted harmonic averaging for the calculated similarities that are corresponding to the N dimensions, to obtain a matching similarity between the unknown traffic and the sampled traffic, wherein, N is an integer greater than or equal to 2, and the N dimensions comprise two or more of the following dimensions: n1 dimensions related to packets of the unknown traffic and the sampled traffic and n2 dimensions related to sessions corresponding to the unknown traffic and the sampled traffic, wherein n1 and n2 are positive integers; and
   if the matching similarity between the sampled traffic and the unknown traffic is greater than a similarity threshold, outputting a traffic identification result indicating that the unknown traffic and the sampled traffic are of a same service type.

2. The method according to claim 1, wherein the separately calculating similarities between the unknown traffic and sampled traffic according to N dimensions comprises: when the unknown traffic fails to be identified based on a deep packet inspection technology, separately calculating the similarities between the unknown traffic and the sampled traffic according to the N dimensions.

3. The method according to claim 1 or 2, wherein the separately calculating similarities between the unknown traffic and sampled traffic according to N dimensions comprises:

   performing at least two of the following similarity calculation operations:

   calculating a similarity between a packet length of the unknown traffic and a packet length of the sampled traffic;
   calculating a similarity between packet payload content of the unknown traffic and packet payload content of the sampled traffic;
   calculating a similarity between a packet port number of the unknown traffic and a packet port number of the sampled traffic;
   calculating a similarity between a packet transmission rate of the unknown traffic and a packet transmission rate of the sampled traffic;
   calculating a similarity between an uplink packet quantity of the unknown traffic and an uplink packet quantity of the sampled traffic;

calculating a similarity between a downlink packet quantity of the unknown traffic and a downlink packet quantity of the sampled traffic;

calculating a similarity between a ratio of the uplink packet quantity to the downlink packet quantity of the unknown traffic and a ratio of the uplink packet quantity to the downlink packet quantity of the sampled traffic;

calculating a similarity between an uplink traffic volume of the unknown traffic and an uplink traffic volume of the sampled traffic;

calculating a similarity between a downlink traffic volume of the unknown traffic and a downlink traffic volume of the sampled traffic;

calculating a similarity between a ratio of the uplink traffic volume to the downlink traffic volume of the unknown traffic and a ratio of the uplink traffic volume to the downlink traffic volume of the sampled traffic; and

calculating a similarity between a traffic volume of first M packets of the unknown traffic and a traffic volume of first M packets of the sampled traffic.

4. The method according to claim 3, wherein the calculating a similarity between packet payload content of the unknown traffic and packet payload content of the sampled traffic comprises:

calculating a similarity between characters of the packet payload content of the unknown traffic and characters of the packet payload content of the sampled traffic;

calculating a matching degree between the packet payload content of the unknown traffic and the packet payload content of the sampled traffic; and

calculating a product of a square root of the matching degree and the character similarity, wherein the product obtained by calculation is the similarity between the packet payload content of the unknown traffic and the packet payload content of the sampled traffic, and the character similarity is equal to a quantity of same characters between the packet payload content of the unknown traffic and the packet payload content of the sampled traffic, divided by a total quantity of characters of the packet payload content of the sampled traffic, and the matching degree is equal to 1 minus a differentiation degree between the packet payload content of the unknown traffic and the packet payload content of the sampled traffic, wherein the differentiation degree is equal to a quantity of characters, in the packet payload content of the sampled traffic, which are different from characters in the packet payload content of the unknown traffic, divided by a total quantity of characters of the packet payload content of the sampled traffic.

5. The method according to claim 3 or 4, wherein the calculating a similarity between a packet length of the unknown traffic and a packet length of the sampled traffic comprises:

dividing the packet length of the unknown traffic by the packet length of the sampled traffic to obtain a quotient, wherein the quotient is the similarity between the packet length of the unknown traffic and the packet length of the sampled traffic; or, determining a first length interval within which the packet length of the unknown traffic falls, and determining, according to a correspondence relationship between a length interval and a similarity value, a similarity value corresponding to the first length interval, wherein the similarity value corresponding to the first length interval is the similarity between the packet length of the unknown traffic and the packet length of the sampled traffic.

6. A similarity matching apparatus (500), comprising:

an obtaining unit (510), configured to obtain unknown traffic;
**characterised in that** the similarity matching apparatus further comprises:

a similarity calculating unit (520), configured to separately calculate, according to N dimensions, similarities between sampled traffic and the unknown traffic obtained by the obtaining unit; and perform weighted harmonic averaging for the calculated similarities that are corresponding to the N dimensions, to obtain a matching similarity between the unknown traffic and the sampled traffic, wherein, N is an integer greater than or equal to 2, and the N dimensions comprise two or more of the following dimensions: n1 dimensions related to packets of the unknown traffic and the sampled traffic and n2 dimensions related to sessions corresponding to the unknown traffic and the sampled traffic, wherein n1 and n2 are positive integers; and wherein the similarity matching apparatus is configured to output a traffic identification result indicating that the unknown traffic and the sampled traffic are of a same service type if the matching similarity between the sampled traffic and the unknown traffic is greater than a similarity threshold.

**7.** The similarity matching apparatus according to claim 6, wherein:

the similarity calculating unit is configured to separately calculate the similarities between the unknown traffic and the sampled traffic according to the N dimensions when the unknown traffic fails to be identified based on a deep packet inspection technology; and perform weighted harmonic averaging for the calculated similarities that are corresponding to the N dimensions, to obtain the matching similarity between the unknown traffic and the sampled traffic.

**8.** The similarity matching apparatus according to claim 6 or 7, wherein in respect of the separately calculating similarities between the unknown traffic and sampled traffic according to N dimensions, the similarity calculating unit is configured to perform at least two of the following similarity calculation operations:

calculating a similarity between a packet length of the unknown traffic and a packet length of the sampled traffic;
calculating a similarity between packet payload content of the unknown traffic and packet payload content of the sampled traffic;
calculating a similarity between a packet port number of the unknown traffic and a packet port number of the sampled traffic;
calculating a similarity between a packet transmission rate of the unknown traffic and a packet transmission rate of the sampled traffic;
calculating a similarity between an uplink packet quantity of the unknown traffic and an uplink packet quantity of the sampled traffic;
calculating a similarity between a downlink packet quantity of the unknown traffic and a downlink packet quantity of the sampled traffic;
calculating a similarity between a ratio of the uplink packet quantity to the downlink packet quantity of the unknown traffic and a ratio of the uplink packet quantity to the downlink packet quantity of the sampled traffic;
calculating a similarity between an uplink traffic volume of the unknown traffic and an uplink traffic volume of the sampled traffic;
calculating a similarity between a downlink traffic volume of the unknown traffic and a downlink traffic volume of the sampled traffic;
calculating a similarity between a ratio of the uplink traffic volume to the downlink traffic volume of the unknown traffic and a ratio of the uplink traffic volume to the downlink traffic volume of the sampled traffic;
calculating a similarity between a traffic volume of first M packets of the unknown traffic and a traffic volume of first M packets of the sampled traffic; and
performing weighted harmonic averaging for at least two similarities obtained by calculation, to obtain the matching similarity between the unknown traffic and the sampled traffic.

**9.** The similarity matching apparatus according to claim 8, wherein in respect of the calculating a similarity between packet payload content of the unknown traffic and packet payload content of the sampled traffic, the similarity calculating unit is configured to:

calculate a similarity between characters of the packet payload content of the unknown traffic and characters of the packet payload content of the sampled traffic;
calculate a matching degree between the packet payload content of the unknown traffic and the packet payload content of the sampled traffic; and
calculate a product of a square root of the matching degree and the character similarity, wherein the product obtained by calculation is the similarity between the packet payload content of the unknown traffic and the packet payload content of the sampled traffic, and the character similarity is equal to a quantity of same characters between the packet payload content of the unknown traffic and the packet payload content of the sampled traffic, divided by a total quantity of characters of the packet payload content of the sampled traffic, and the matching degree is equal to 1 minus a differentiation degree between the packet payload content of the unknown traffic and the packet payload content of the sampled traffic, wherein the differentiation degree is equal to a quantity of characters, in the packet payload content of the sampled traffic, which are different from characters in the packet payload content of the unknown traffic, divided by a total quantity of characters of the packet payload content of the sampled traffic.

**10.** The similarity matching apparatus according to claim 8, wherein in respect of the calculating a similarity between a packet length of the unknown traffic and a packet length of the sampled traffic, the similarity calculating unit is configured to divide the packet length of the unknown traffic by the packet length of the sampled traffic to obtain a quotient, wherein the quotient is the similarity between the packet length of the unknown traffic and the packet length of the sampled traffic; or, determine a first length interval within which the packet length of the unknown traffic falls, and determine, according to a correspondence relationship between a length interval and a similarity value, a similarity value corresponding to the first length interval, wherein the similarity value corresponding to the first length interval is the similarity between the packet length of the unknown traffic and the packet length of the sampled traffic.

11. A traffic analysis server (1500), wherein the traffic analysis server comprises:

a receiver (1501) configured to receive unknown traffic or a mirror of unknown traffic,
a similarity identification engine (1502) coupled with the receiver, and
a transmitter (1503) configured to send a matching similarity between the unknown traffic and sampled traffic, or send a matching similarity between the mirror of the unknown traffic and sampled traffic, or send a matching similarity between the unknown traffic output by the similarity identification engine and sampled traffic, or send a matching similarity between the mirror of the unknown traffic output by the similarity identification engine and sampled traffic, wherein the similarity identification engine is the similarity matching apparatus according to any one of claims 6 to 10.

12. A communication network element (1400), comprising a transceiver (1401) and a processor (1403) coupled with the transceiver and configured to perform network communication, wherein the communication network element further comprises: a similarity identification engine (1402) coupled with the transceiver, wherein the similarity identification engine is the similarity matching apparatus according to any one of claims 6 to 10.

**Patentansprüche**

1. Ähnlichkeitsabgleichverfahren, umfassend:

Erlangen (101) von unbekanntem Traffic;
**dadurch gekennzeichnet, dass** das Verfahren ferner Folgendes umfasst:

getrenntes Berechnen (102) von Ähnlichkeiten zwischen dem unbekannten Traffic und abgetastetem Traffic gemäß N Dimensionen; und Durchführen einer gewichteten harmonischen Mittelwertbildung für die berechneten Ähnlichkeiten, die den N Dimensionen entsprechen, um eine übereinstimmende Ähnlichkeit zwischen dem unbekannten Traffic und dem abgetasteten Traffic zu erlangen, wobei N eine Ganzzahl größer als oder gleich 2 ist und die N Dimensionen zwei oder mehrere der folgenden Dimensionen umfassen: n1 Dimensionen, die mit Paketen des unbekannten Traffics und des abgetasteten Traffics zusammenhängen, und n2 Dimensionen, die mit Sessions zusammenhängen, die dem unbekannten Traffic und dem abgetasteten Traffic entsprechen, wobei n1 und n2 positive Ganzzahlen sind; und
wenn die übereinstimmende Ähnlichkeit zwischen dem abgetasteten Traffic und dem unbekannten Traffic größer als ein Ähnlichkeitsschwellenwert ist, Ausgeben eines Trafficidentifizierungsergebnisses, das anzeigt, dass der unbekannte Traffic und der abgetastete Traffic von einer gleichen Dienstart sind.

2. Verfahren nach Anspruch 1, wobei das getrennte Berechnen der Ähnlichkeiten zwischen dem unbekannten Traffic und dem abgetasteten Traffic gemäß N Dimensionen Folgendes umfasst: wenn der unbekannte Traffic nicht auf Basis einer Deep-Packet-Inspection-Technik identifiziert werden kann, getrenntes Berechnen der Ähnlichkeiten zwischen dem unbekannten Traffic und dem abgetasteten Traffic gemäß den N Dimensionen.

3. Verfahren nach Anspruch 1 oder 2, wobei das getrennte Berechnen von Ähnlichkeiten zwischen dem unbekannten Traffic und abgetasteten Traffic gemäß N Dimensionen Folgendes umfasst: Durchführen von mindestens zwei der folgenden Ähnlichkeitsberechnung soperationen:

Berechnen einer Ähnlichkeit zwischen einer Paketlänge des unbekannten Traffics und einer Paketlänge des abgetasteten Traffics;
Berechnen einer Ähnlichkeit zwischen Paketnutzdateninhalten des unbekannten Traffics und Paketnutzdateninhalten des abgetasteten Traffics;
Berechnen einer Ähnlichkeit zwischen einer Paket-Portnummer des unbekannten Traffics und einer Paket-Portnummer des abgetasteten Traffics;

39

Berechnen einer Ähnlichkeit zwischen einer Paketübertragungsrate des unbekannten Traffics und einer Paketübertragungsrate des abgetasteten Traffics;

Berechnen einer Ähnlichkeit zwischen einer Uplink-Paketanzahl des unbekannten Traffics und einer Uplink-Paketanzahl des abgetasteten Traffics;

Berechnen einer Ähnlichkeit zwischen einer Downlink-Paketanzahl des unbekannten Traffics und einer Downlink-Paketanzahl des abgetasteten Traffics;

Berechnen einer Ähnlichkeit zwischen einem Verhältnis der Uplink-Paketanzahl zu der Downlink-Paketanzahl des unbekannten Traffics und einem Verhältnis der Uplink-Paketanzahl zu der Downlink-Paketanzahl des abgetasteten Traffics;

Berechnen einer Ähnlichkeit zwischen einer Uplink-Trafficmenge des unbekannten Traffics und einer Uplink-Trafficmenge des abgetasteten Traffics;

Berechnen einer Ähnlichkeit zwischen einer Downlink-Trafficmenge des unbekannten Traffics und einer Downlink-Trafficmenge des abgetasteten Traffics;

Berechnen einer Ähnlichkeit zwischen einem Verhältnis der Uplink-Trafficmenge zu der Downlink-Trafficmenge des unbekannten Traffics und einem Verhältnis der Uplink-Trafficmenge zu der Downlink-Trafficmenge des abgetasteten Traffics; und

Berechnen einer Ähnlichkeit zwischen einer Trafficmenge von ersten M Paketen des unbekannten Traffics und einer Trafficmenge von ersten M Paketen der abgetasteten Traffics.

4.  Verfahren nach Anspruch 3, wobei das Berechnen einer Ähnlichkeit zwischen Paketnutzdateninhalten des unbekannten Traffics und Paketnutzdateninhalten des abgetasteten Traffics Folgendes umfasst:

Berechnen einer Ähnlichkeit zwischen Zeichen des Paketnutzdateninhalts des unbekannten Traffics und Zeichen des Paketnutzdateninhalts des abgetasteten Traffics;

Berechnen eines Übereinstimmungsgrads zwischen den Paketnutzdateninhalten des unbekannten Traffics und den Paketnutzdateninhalten des abgetasteten Traffics; und Berechnen eines Produkts aus einer Quadratwurzel des Übereinstimmungsgrads und der Zeichenähnlichkeit, wobei das durch Berechnen erlangte Produkt die Ähnlichkeit zwischen dem Paketnutzdateninhalt des unbekannten Traffics und dem Paketnutzdateninhalt des abgetasteten Traffics ist und die Zeichenähnlichkeit gleich einer Anzahl von gleichen Zeichen zwischen dem Paketnutzdateninhalt des unbekannten Traffics und dem Paketnutzdateninhalt des abgetasteten Traffics geteilt durch eine Gesamtzeichenanzahl des Paketnutzdateninhalts des abgetasteten Traffics ist und der Übereinstimmungsgrad gleich 1 minus einem Unterscheidungsgrad zwischen dem Paketnutzdateninhalt des unbekannten Traffics und dem Paketnutzdateninhalt des abgetasteten Traffics ist, wobei der Unterscheidungsgrad gleich einer Anzahl von Zeichen in dem Paketnutzdateninhalt des abgetasteten Traffics, die sich von Zeichen in dem Paketnutzdateninhalt des unbekannten Traffics unterscheiden, geteilt durch eine Gesamtanzahl von Zeichen des Paketnutzdateninhalts des abgetasteten Traffics ist.

5.  Verfahren nach Anspruch 3 oder 4, wobei das Berechnen einer Ähnlichkeit zwischen einer Paketlänge des unbekannten Traffics und einer Paketlänge des abgetasteten Traffics Folgendes umfasst: Teilen der Paketlänge des unbekannten Traffics durch die Paketlänge des abgetasteten Traffics, um einen Quotienten zu erlangen, wobei der Quotient die Ähnlichkeit zwischen der Paketlänge des unbekannten Traffics und der Paketlänge des abgetasteten Traffics ist; oder Bestimmen eines ersten Längenintervalls, innerhalb dessen die Paketlänge des unbekannten Traffics liegt, und Bestimmen, gemäß einer Übereinstimmungsbeziehung zwischen einem Längenintervall und einem Ähnlichkeitswert, eines Ähnlichkeitswerts in Übereinstimmung mit dem ersten Längenintervall, wobei der Ähnlichkeitswert, der dem ersten Längenintervall entspricht, die Ähnlichkeit zwischen der Paketlänge des unbekannten Traffics und der Paketlänge des abgetasteten Traffics ist.

6.  Ähnlichkeitsabgleichvorrichtung (500), umfassend:

eine Erlangungseinheit (510), die zum Erlangen von unbekanntem Traffic konfiguriert ist;
**dadurch gekennzeichnet, dass** die Ähnlichkeitsabgleichvorrichtung ferner Folgendes umfasst:

eine Ähnlichkeitsberechnungseinheit (520), die dafür konfiguriert ist, Ähnlichkeiten zwischen abgetastetem Traffic und dem unbekannten Traffic, der von der Erlangungseinheit erlangt wird, gemäß N Dimensionen einzeln zu berechnen; und
eine gewichtete harmonische Mittelwertbildung für die berechneten Ähnlichkeiten, die den N Dimensionen entsprechen, durchzuführen, um eine übereinstimmende Ähnlichkeit zwischen dem unbekannten Traffic und dem abgetasteten Traffic zu erlangen, wobei N eine Ganzzahl größer als oder gleich 2 ist und die N Dimensionen zwei oder mehrere der folgenden Dimensionen umfassen: n1 Dimensionen, die mit Paketen des unbekannten Traffics und des abgetasteten Traffics zusammenhängen, und n2 Dimensionen, die mit Sessions zusammenhängen, die dem unbekannten Traffic und dem abgetasteten Traffic entsprechen, wobei n1 und n2 positive Ganzzahlen sind; und

wobei die Ähnlichkeitsabgleichvorrichtung konfiguriert ist, ein Trafficidentifizierungsergebnis auszugeben, das anzeigt, dass der unbekannte Traffic und der abgetastete Traffic von einer gleichen Dienstart sind, wenn die übereinstimmende Ähnlichkeit zwischen dem abgetasteten Traffic und dem unbekannten Traffic größer als ein Ähnlichkeitsschwellenwert ist.

7. Ähnlichkeitsabgleichvorrichtung nach Anspruch 6, wobei:

die Ähnlichkeitsberechnungseinheit konfiguriert ist, die Ähnlichkeiten zwischen dem unbekannten Traffic und dem abgetasteten Traffic gemäß den N Dimensionen getrennt zu berechnen, wenn der unbekannte Traffic nicht auf Basis einer Deep-Packet-Inspection-Technik identifiziert werden kann; und eine gewichtete harmonische Mittelwertbildung für die berechneten Ähnlichkeiten, die den N Dimensionen entsprechen, durchzuführen, um die übereinstimmende Ähnlichkeit zwischen dem unbekannten Traffic und dem abgetasteten Traffic zu erlangen.

8. Ähnlichkeitsabgleichvorrichtung nach Anspruch 6 oder 7, wobei die Ähnlichkeitsberechnungseinheit, in Bezug auf das getrennte Berechnen von Ähnlichkeiten zwischen dem unbekannten Traffic und abgetastetem Traffic gemäß N Dimensionen, konfiguriert ist, mindestens zwei der folgenden Ähnlichkeitsberechnungsoperationen durchzuführen:

Berechnen einer Ähnlichkeit zwischen einer Paketlänge des unbekannten Traffics und einer Paketlänge des abgetasteten Traffics;
Berechnen einer Ähnlichkeit zwischen Paketnutzdateninhalten des unbekannten Traffics und Paketnutzdateninhalten des abgetasteten Traffics;
Berechnen einer Ähnlichkeit zwischen einer Paket-Portnummer des unbekannten Traffics und einer Paket-Portnummer des abgetasteten Traffics;
Berechnen einer Ähnlichkeit zwischen einer Paketübertragungsrate des unbekannten Traffics und einer Paketübertragungsrate des abgetasteten Traffics;
Berechnen einer Ähnlichkeit zwischen einer Uplink-Paketanzahl des unbekannten Traffics und einer Uplink-Paketanzahl des abgetasteten Traffics;
Berechnen einer Ähnlichkeit zwischen einer Downlink-Paketanzahl des unbekannten Traffics und einer Downlink-Paketanzahl des abgetasteten Traffics;
Berechnen einer Ähnlichkeit zwischen einem Verhältnis der Uplink-Paketanzahl zu der Downlink-Paketanzahl des unbekannten Traffics und einem Verhältnis der Uplink-Paketanzahl zu der Downlink-Paketanzahl des abgetasteten Traffics;
Berechnen einer Ähnlichkeit zwischen einer Uplink-Trafficmenge des unbekannten Traffics und einer Uplink-Trafficmenge des abgetasteten Traffics;
Berechnen einer Ähnlichkeit zwischen einer Downlink-Trafficmenge des unbekannten Traffics und einer Downlink-Trafficmenge des abgetasteten Traffics;
Berechnen einer Ähnlichkeit zwischen einem Verhältnis der Uplink-Trafficmenge zu der Downlink-Trafficmenge des unbekannten Traffics und einem Verhältnis der Uplink-Trafficmenge zu der Downlink-Trafficmenge des abgetasteten Traffics;
Berechnen einer Ähnlichkeit zwischen einer Trafficmenge von ersten M Paketen des unbekannten Traffics und einer Trafficmenge von ersten M Paketen des abgetasteten Traffics; und
Durchführen gewichteter harmonischer Mittelwertbildung für mindestens zwei durch Berechnung erlangte Ähnlichkeiten, um die übereinstimmende Ähnlichkeit zwischen dem unbekannten Traffic und dem abgetasteten Traffic zu erlangen.

9. Ähnlichkeitsabgleichvorrichtung nach Anspruch 8, wobei die Ähnlichkeitsberechnungseinheit hinsichtlich der Berechnung einer Ähnlichkeit zwischen Paketnutzdateninhalten des unbekannten Traffics und Paketnutzdateninhalten des abgetasteten Traffics für Folgendes konfiguriert ist:

Berechnen einer Ähnlichkeit zwischen Zeichen des Paketnutzdateninhalts des unbekannten Traffics und Zeichen des Paketnutzdateninhalts des abgetasteten Traffics;
Berechnen eines Übereinstimmungsgrads zwischen den Paketnutzdateninhalten des unbekannten Traffics und den Paketnutzdateninhalten des abgetasteten Traffics; und

Berechnen eines Produkts aus einer Quadratwurzel des Übereinstimmungsgrads und der Zeichenähnlichkeit, wobei das durch Berechnen erlangte Produkt die Ähnlichkeit zwischen dem Paketnutzdateninhalt des unbekannten Traffics und dem Paketnutzdateninhalt des abgetasteten Traffics ist und die Zeichenähnlichkeit gleich einer Anzahl von gleichen Zeichen zwischen dem Paketnutzdateninhalt des unbekannten Traffics und dem Paketnutzdateninhalt des abgetasteten Traffics geteilt durch eine Gesamtzeichenanzahl des Paketnutzdateninhalts des abgetasteten Traffics ist und der Übereinstimmungsgrad gleich 1 minus einem Unterscheidungsgrad zwischen dem Paketnutzdateninhalt des unbekannten Traffics und dem Paketnutzdateninhalt des abgetasteten Traffics ist, wobei der Unterscheidungsgrad gleich einer Anzahl von Zeichen in dem Paketnutzdateninhalt des abgetasteten Traffics, die sich von Zeichen in dem Paketnutzdateninhalt des unbekannten Traffics unterscheiden, geteilt durch eine Gesamtanzahl von Zeichen des Paketnutzdateninhalts des abgetasteten Traffics ist.

10. Ähnlichkeitsabgleichvorrichtung nach Anspruch 8, wobei die Berechnungseinheit, in Bezug auf das Berechnen einer Ähnlichkeit zwischen einer Paketlänge des unbekannten Traffics und einer Paketlänge des abgetasteten Traffics, konfiguriert ist, die Paketlänge des unbekannten Traffics durch die Paketlänge des abgetasteten Traffics zu teilen, um einen Quotienten zu erlangen, wobei der Quotient die Ähnlichkeit zwischen der Paketlänge des unbekannten Traffics und der Paketlänge des abgetasteten Traffics ist; oder ein erstes Längenintervall zu bestimmen, innerhalb dessen die Paketlänge des unbekannten Traffics liegt, und gemäß einer Übereinstimmungsbeziehung zwischen einem Längenintervall und einem Ähnlichkeitswert, einen Ähnlichkeitswert in Übereinstimmung mit dem ersten Längenintervall zu bestimmen, wobei der Ähnlichkeitswert, der dem ersten Längenintervall entspricht, die Ähnlichkeit zwischen der Paketlänge des unbekannten Traffics und der Paketlänge des abgetasteten Traffics ist.

11. Trafficanalyseserver (1500), wobei der Trafficanalyseserver Folgendes umfasst:

einen Empfänger (1501), der zum Empfangen von unbekanntem Traffic oder einem Spiegel von unbekannten Traffic konfiguriert ist,
eine Ähnlichkeitsidentifizierungsengine (1502), die mit dem Empfänger verbunden ist, und
einen Sender (1503), der konfiguriert ist, eine übereinstimmende Ähnlichkeit zwischen dem unbekannten Traffic und abgetastetem Traffic zu senden, oder eine übereinstimmende Ähnlichkeit zwischen dem Spiegel des unbekannten Traffics und abgetastetem Traffic zu senden, oder eine übereinstimmende Ähnlichkeit zwischen der unbekannten Trafficausgabe durch die Ähnlichkeitsidentifizierungsengine und abgetastetem Traffic zu senden, oder eine übereinstimmende Ähnlichkeit zwischen dem Spiegel der unbekannten Trafficausgabe durch die Ähnlichkeitsidentifizierungsengine und abgetastetem Traffic zu senden, wobei die Ähnlichkeitsidentifizierungsengine die Ähnlichkeitsabgleichvorrichtung nach einem der Ansprüche 6 bis 10 ist.

12. Kommunikationsnetzwerkelement (1400), das einen Sender-Empfänger (1401) und einen Prozessor (1403), der mit dem Sender-Empfänger verbunden ist und konfiguriert ist, Netzwerkkommunikation durchzuführen, aufweist, wobei das Kommunikationsnetzwerkelement ferner Folgendes aufweist: eine Ähnlichkeitsidentifizierungsengine (1402), die mit dem Sender-Empfänger verbunden ist, wobei die Ähnlichkeitsidentifizierungsengine die Ähnlichkeitsabgleichvorrichtung nach einem der Ansprüche 6 bis 10 ist.

## Revendications

1. Procédé de mise en correspondance de similarité, consistant à :

obtenir (101) un trafic inconnu ;
**caractérisé en ce que** le procédé consiste en outre à :

calculer de façon distincte (102) des similarités entre le trafic inconnu et un trafic échantillonné selon N dimensions ; et établir une moyenne harmonique pondérée pour les similarités calculées qui correspondent aux N dimensions afin d'obtenir une similarité de mise en correspondance entre le trafic inconnu et le trafic échantillonné, dans lequel N est un nombre entier supérieur ou égal à 2 et les N dimensions comprennent au moins deux dimensions suivantes : n1 dimensions associées à des paquets du trafic inconnu et du trafic échantillonné et n2 dimensions associées à des sessions correspondant au trafic inconnu et au trafic échantillonné, dans lequel n1 et n2 sont des nombres entiers positifs ; et
si la similarité de mise en correspondance entre le trafic échantillonné et le trafic inconnu est supérieure à un seuil de similarité, transmettre un résultat d'identification de trafic indiquant que le trafic inconnu et le trafic échantillonné sont d'un même type de service.

**2.** Procédé selon la revendication 1, dans lequel le calcul distinct de similarités entre le trafic inconnu et le trafic échantillonné selon N dimensions consiste : lorsque le trafic inconnu ne permet pas d'être identifié en se basant sur une technologie d'inspection profonde de paquet, à calculer de façon distincte les similarités entre le trafic inconnu et le trafic échantillonné selon les N dimensions.

**3.** Procédé selon la revendication 1 ou 2, dans lequel le calcul distinct de similarités entre le trafic inconnu et le trafic échantillonné selon N dimensions consiste à :

effectuer au moins deux des opérations de calcul de similarité suivantes consistant à :

calculer une similarité entre une longueur de paquet du trafic inconnu et une longueur de paquet du trafic échantillonné ;
calculer une similarité entre un contenu de données utiles de paquet du trafic inconnu et un contenu de données utiles de paquet du trafic échantillonné ;
calculer une similarité entre un numéro de port de paquet du trafic inconnu et un numéro de port de paquet du trafic échantillonné ;
calculer une similarité entre une vitesse de transmission de paquet du trafic inconnu et une vitesse de transmission de paquet du trafic échantillonné ;
calculer une similarité entre une quantité de paquets en liaison montante du trafic inconnu et une quantité de paquets en liaison montante du trafic échantillonné ;
calculer une similarité entre une quantité de paquets en liaison descendante du trafic inconnu et une quantité de paquets en liaison descendante du trafic échantillonné ;
calculer une similarité entre un rapport de la quantité de paquets en liaison montante sur la quantité de paquets en liaison descendante du trafic inconnu et un rapport de la quantité de paquets en liaison montante sur la quantité de paquets en liaison descendante du trafic échantillonné ;
calculer une similarité entre un volume de trafic en liaison montante du trafic inconnu et un volume de trafic en liaison montante du trafic échantillonné ;
calculer une similarité entre un volume de trafic en liaison descendante du trafic inconnu et un volume de trafic en liaison descendante du trafic échantillonné ;
calculer une similarité entre un rapport du volume de trafic en liaison montante sur le volume de trafic en liaison descendante du trafic inconnu et un rapport du volume de trafic en liaison montante sur le volume de trafic en liaison descendante du trafic échantillonné ; et
calculer une similarité entre un volume de trafic de M premiers paquets du trafic inconnu et un volume de trafic de M premiers paquets du trafic échantillonné.

**4.** Procédé selon la revendication 3, dans lequel le calcul d'une similarité entre un contenu de données utiles de paquet du trafic inconnu et un contenu de données utiles de paquet du trafic échantillonné consiste à :

calculer une similarité entre des caractères du contenu de données utiles de paquet du trafic inconnu et des caractères du contenu de données utiles de paquet du trafic échantillonné ;
calculer un degré de correspondance entre le contenu de données utiles de paquet du trafic inconnu et le contenu de données utiles de paquet du trafic échantillonné ; et
calculer un produit d'une racine carrée du degré de correspondance et de la similarité de caractères, dans lequel le produit obtenu par calcul est la similarité entre le contenu de données utiles de paquet du trafic inconnu et le contenu de données utiles de paquet du trafic échantillonné et la similarité de caractères est égale à une quantité de caractères identiques entre le contenu de données utiles de paquet du trafic inconnu et le contenu de données utiles de paquet du trafic échantillonné, divisée par la quantité totale de caractères du contenu de données utiles de paquet du trafic échantillonné et le degré de correspondance est égal à 1 moins un degré de différenciation entre le contenu de données utiles de paquet du trafic inconnu et le contenu de données utiles de paquet du trafic échantillonné, dans lequel le degré de différenciation est égal à une quantité de caractères dans le contenu de données utiles de paquet du trafic échantillonné, qui sont différents des caractères dans le contenu de données utiles de paquet du trafic inconnu, divisé par la quantité totale de caractères du contenu de données utiles de paquet du trafic échantillonné.

**5.** Procédé selon la revendication 3 ou 4, dans lequel le calcul d'une similarité entre une longueur de paquet du trafic inconnu et une longueur de paquet du trafic échantillonné consiste à : diviser la longueur de paquet du trafic inconnu par la longueur de paquet du trafic échantillonné afin d'obtenir un quotient, dans lequel le quotient est la similarité entre la longueur de paquet du trafic inconnu et la longueur de paquet du trafic échantillonné ; ou déterminer un premier intervalle de longueur dans lequel la longueur de paquet du trafic inconnu diminue et déterminer, en fonction d'une relation de correspondance entre un intervalle de longueur et une valeur de similarité, une valeur de similarité correspondant au premier intervalle de longueur, dans lequel la valeur de similarité correspondant au premier intervalle de longueur est la similarité entre la longueur de paquet du trafic inconnu et la longueur de paquet du trafic échantillonné.

6. Appareil de mise en correspondance de similarité (500), comprenant :

une unité d'obtention (510), configurée pour obtenir un trafic inconnu ;
**caractérisé en ce que** l'appareil de mise en correspondance de similarité comprend en outre :

une unité de calcul de similarité (520), configurée pour calculer de façon distincte, selon N dimensions, des similarités entre un trafic échantillonné et le trafic inconnu obtenu par l'unité d'obtention ; et établir une moyenne harmonique pondérée pour les similarités calculées qui correspondent aux N dimensions afin d'obtenir une similarité de mise en correspondance entre le trafic inconnu et le trafic échantillonné, dans lequel N est un nombre entier supérieur ou égal à 2 et les N dimensions comprennent au moins deux dimensions suivantes : n1 dimensions associées à des paquets du trafic inconnu et du trafic échantillonné et n2 dimensions associées à des sessions correspondant au trafic inconnu et au trafic échantillonné, dans lequel n1 et n2 sont des nombres entiers positifs ; et
dans lequel l'appareil de mise en correspondance de similarité est configuré pour transmettre un résultat d'identification de trafic indiquant que le trafic inconnu et le trafic échantillonné sont d'un même type de service, si la similarité de mise en correspondance entre le trafic échantillonné et le trafic inconnu est supérieure à un seuil de similarité.

7. Appareil de mise en correspondance de similarité selon la revendication 6, dans lequel :

l'unité de calcul de similarité est configurée pour calculer de façon distincte les similarités entre le trafic inconnu et un trafic échantillonné selon N dimensions lorsque le trafic inconnu ne permet pas d'être identifié en se basant sur une technologie d'inspection profonde de paquet ; et établir une moyenne harmonique pondérée pour les similarités calculées qui correspondent aux N dimensions afin d'obtenir la similarité de mise en correspondance entre le trafic inconnu et le trafic échantillonné.

8. Appareil de mise en correspondance de similarité selon la revendication 6 ou 7, dans lequel, en ce qui concerne le calcul distinct de similarités entre le trafic inconnu et le trafic échantillonné selon N dimensions, l'unité de calcul de similarité est configurée pour effectuer au moins deux des opérations de calcul de similarité suivantes consistant à :

calculer une similarité entre une longueur de paquet du trafic inconnu et une longueur de paquet du trafic échantillonné ;
calculer une similarité entre un contenu de données utiles de paquet du trafic inconnu et un contenu de données utiles de paquet du trafic échantillonné ;
calculer une similarité entre un numéro de port de paquet du trafic inconnu et un numéro de port de paquet du trafic échantillonné ;
calculer une similarité entre une vitesse de transmission de paquet du trafic inconnu et une vitesse de transmission de paquet du trafic échantillonné ;
calculer une similarité entre une quantité de paquets en liaison montante du trafic inconnu et une quantité de paquets en liaison montante du trafic échantillonné ;
calculer une similarité entre une quantité de paquets en liaison descendante du trafic inconnu et une quantité de paquets en liaison descendante du trafic échantillonné ;
calculer une similarité entre un rapport de la quantité de paquets en liaison montante sur la quantité de paquets en liaison descendante du trafic inconnu et un rapport de la quantité de paquets en liaison montante sur la quantité de paquets en liaison descendante du trafic échantillonné ;
calculer une similarité entre un volume de trafic en liaison montante du trafic inconnu et un volume de trafic en liaison montante du trafic échantillonné ;
calculer une similarité entre un volume de trafic en liaison descendante du trafic inconnu et un volume de trafic en liaison descendante du trafic échantillonné ;
calculer une similarité entre un rapport du volume de trafic en liaison montante sur le volume de trafic en liaison descendante du trafic inconnu et un rapport du volume de trafic en liaison montante sur le volume de trafic en liaison descendante du trafic échantillonné ;

calculer une similarité entre un volume de trafic de M premiers paquets du trafic inconnu et un volume de trafic de M premiers paquets du trafic échantillonné ; et

établir une moyenne harmonique pondérée pour au moins deux similarités obtenues par calcul afin d'obtenir la similarité de mise en correspondance entre le trafic inconnu et le trafic échantillonné.

9. Appareil de mise en correspondance de similarité selon la revendication 8, dans lequel, en ce qui concerne le calcul d'une similarité entre un contenu de données utiles de paquet du trafic inconnu et un contenu de données utiles de paquet du trafic échantillonné, l'unité de calcul de similarité est configurée pour :

calculer une similarité entre des caractères du contenu de données utiles de paquet du trafic inconnu et des caractères du contenu de données utiles de paquet du trafic échantillonné ;

calculer un degré de correspondance entre le contenu de données utiles de paquet du trafic inconnu et le contenu de données utiles de paquet du trafic échantillonné ; et

calculer un produit d'une racine carrée du degré de correspondance et de la similarité de caractères, dans lequel le produit obtenu par calcul est la similarité entre le contenu de données utiles de paquet du trafic inconnu et le contenu de données utiles de paquet du trafic échantillonné et la similarité de caractères est égale à une quantité de caractères identiques entre le contenu de données utiles de paquet du trafic inconnu et le contenu de données utiles de paquet du trafic échantillonné, divisée par la quantité totale de caractères du contenu de données utiles de paquet du trafic échantillonné et le degré de correspondance est égal à 1 moins un degré de différenciation entre le contenu de données utiles de paquet du trafic inconnu et le contenu de données utiles de paquet du trafic échantillonné, dans lequel le degré de différenciation est égal à une quantité de caractères dans le contenu de données utiles de paquet du trafic échantillonné, qui sont différents des caractères dans le contenu de données utiles de paquet du trafic inconnu, divisé par la quantité totale de caractères du contenu de données utiles de paquet du trafic échantillonné.

10. Appareil de mise en correspondance de similarité selon la revendication 8, dans lequel, en ce qui concerne le calcul d'une similarité entre une longueur de paquet du trafic inconnu et une longueur de paquet du trafic échantillonné, l'unité de calcul de similarité est configurée pour diviser la longueur de paquet du trafic inconnu par la longueur de paquet du trafic échantillonné afin d'obtenir un quotient, dans lequel le quotient est la similarité entre la longueur de paquet du trafic inconnu et la longueur de paquet du trafic échantillonné ; ou déterminer un premier intervalle de longueur dans lequel la longueur de paquet du trafic inconnu diminue et déterminer, en fonction d'une relation de correspondance entre un intervalle de longueur et une valeur de similarité, une valeur de similarité correspondant au premier intervalle de longueur, dans lequel la valeur de similarité correspondant au premier intervalle de longueur est la similarité entre la longueur de paquet du trafic inconnu et la longueur de paquet du trafic échantillonné.

11. Serveur d'analyse de trafic (1500), dans lequel le serveur d'analyse de trafic comprend :

un récepteur (1501) configuré pour recevoir un trafic inconnu ou un miroir d'un trafic inconnu ;

un moteur d'identification de similarité (1502) couplé au récepteur et

un émetteur (1503) configuré pour envoyer une similarité de mise en correspondance entre le trafic inconnu et le trafic échantillonné ou envoyer une similarité de mise en correspondance entre le miroir du trafic inconnu et le trafic échantillonné ou envoyer une similarité de mise en correspondance entre le trafic inconnu transmis par le moteur d'identification de similarité et le trafic échantillonné ou envoyer une similarité de mise en correspondance entre le miroir du trafic inconnu transmis par le moteur d'identification de similarité et le trafic échantillonné, dans lequel le moteur d'identification de similarité est l'appareil de mise en correspondance de similarité selon l'une quelconque des revendications 6 à 10.

12. Élément de réseau de communication (1400), comprenant un émetteur-récepteur (1401) et un processeur (1403) couplé à l'émetteur-récepteur et configuré pour établir une communication de réseau, dans lequel l'élément de réseau de communication comprend en outre : un moteur d'identification de similarité (1402) couplé à l'émetteur-récepteur, dans lequel le moteur d'identification de similarité est l'appareil de mise en correspondance de similarité selon l'une quelconque des revendications 6 à 10.

Obtain unknown traffic — 101

Separately calculate similarities between the unknown traffic and sampled traffic according to N dimensions; and perform weighted harmonic averaging for calculated similarities that are corresponding to the dimensions, to obtain a matching similarity between the unknown traffic and the sampled traffic, where, N is an integer greater than or equal to 2 — 102

FIG. 1

Pad

Smart phone

**DPI identification system**

NodeB

RNC

**DPI identification system**

**DPI identification system**

Distributed deployment

GGSN

**DPI identification system**

**DPI identification system**

Subsidiary A

E-NodeB

E-GW

**DPI identification system**

E-UTRAN

**DPI identification system**

**DPI identification system**

**DPI identification system**

Server 1  Server 2  Server 3  IDC

Subsidiary B

FIG. 2-a

Similarity matching system

Unknown traffic

Traffic identification report

Unknown traffic

DPI identification system

Traffic identification report

FIG. 2-b

Similarity matching system → Traffic identification report

Unknown traffic

Unknown traffic → DPI identification system → Traffic identification report

FIG. 2-c

Traffic analysis server

Unknown traffic → DPI identification system → Unknown traffic → Similarity matching system → Traffic identification report

Traffic identification report

FIG. 2-d

Perform DPI identification for network traffic A 301

The identification succeeds

The identification fails

Obtain a port number, a packet length, and payload content of network traffic A 302

Calculate similarities between network traffic A and sampled traffic separately according to three dimensions: the port number, the packet length, and the payload content 303

Perform weighted harmonic averaging for calculated similarities that are corresponding to the dimensions, to obtain a matching similarity between network traffic A and the sampled traffic 304

Determine whether the matching similarity obtained by calculation is greater than a similarity threshold 305

Yes 306

No 307

Output an identification result indicating successful identification

Output an identification result indicating failed identification

FIG. 3

FIG. 4-a

FIG. 4-b

| Uplink average package length | 0~100 | 100~200 | Others |
|---|---|---|---|
| Frequency | 222 | 24 | 6 |
| Percentage | 88.1 | 9.5 | 2.4 |
| Accumulation % | 88.1 | 97.6 | 100.0 |

FIG. 4-c

Packet
transmission rate

FIG. 4-d

| Packet transmission rate (ms) | 10~15 | 15~20 | 50~60 | 20~30 | 40~50 | Others |
|---|---|---|---|---|---|---|
| Frequency | 77 | 30 | 6 | 4 | 3 | 4 |
| Percentage | 62.1 | 24.2 | 4.8 | 3.2 | 2.4 | 3.2 |
| Accumulation % | 62.1 | 86.3 | 91.1 | 94.4 | 96.8 | 100.0 |

FIG. 4-e

FIG. 5

FIG. 6

FIG. 7

FIG. 8

910

| Communication network element |

920

| Traffic analysis server |

FIG. 9

1010

| Communication network element |

1020

| Similarity matching server |

FIG. 10

1110

| Communication network element |

1120

| Deep packet inspection identification server |

FIG. 11

1210

| Communication network element |

1220

| Deep packet inspection identification server |

1230

| Similarity matching server |

FIG. 12

1300

Similarity matching server

1301
Processor

1302

1303
User interface

1304
Network interface

1305
Memory

13051
Operating system

13052
application program

FIG. 13

1400
Communication network element

1401
Transceiver

1402
Similarity identification engine

1403
Processor

FIG. 14-a

FIG. 14-b

FIG. 15-a

1500

Traffic analysis server

1501

Receiver

1502

DPI identification engine

1503

Transmitter

1504

Similarity identification engine

FIG. 15-b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060050704 A
- EP 2573995 A